# EUROPÄISCHE PATENTSCHRIFT

(11) **EP 3 099 723 B1**
(45) Veröffentlichungstag und Bekanntmachung des Hinweises auf die Patenterteilung: **20.12.2017**
(21) Anmeldenummer: 15702233.6
(22) Anmeldetag: 30.01.2015
(51) Int. Cl.: C08G 18/48, C08G 18/73, C08G 18/76, C08G 18/83, C08G 18/32, C08L 77/02, C08G 69/18

(54) **VERFAHREN ZUR HERSTELLUNG EINES THERMOPLASTISCHEN COPOLYMERS AUS POLYCAPROLACTAM UND THERMOPLASTISCHEM POLYURETHAN**
PROCESS FOR PREPARING A THERMOPLASTIC COPOLYMER CONSISTING OF POLYCAPROLACTAM AND A THERMOPLASTIC POLYURETHANE
PROCÉDÉ POUR PRÉPARER UN COPOLYMÈRE THERMOPLASTIQUE CONSISTANT EN POLYCAPROLACTAME ET POLYURÉTHANE THERMOPLASTIQUE

(30) Priorität: 31.01.2014 EP 14153516
(43) Veröffentlichungstag der Anmeldung: 07.12.2016
(73) Patentinhaber: BASF SE, 67056 Ludwigshafen am Rhein (DE)
(72) Erfinder: DESBOIS, Philippe, 68535 Edingen-Neckarhausen (DE); BRUCHMANN, Bernd, 67251 Freinsheim (DE); THIELBEER, Frank, 39128 Magdeburg (DE); MÜLHAUPT, Rolf, 79117 Freiburg (DE)
(86) Internationale Anmeldenummer: PCT/EP2015/051888
(87) Internationale Veröffentlichungsnummer: WO 2015/114073

(56) Entgegenhaltungen:
- DE-A1-102006 036 539
- G.S. YANG: "Preparation and characterisation of thermoplastic polyurethane elastomer and polyamide 6 blends by in situ anionic ring-opening polymerization of -caprolactam", POLYMER ENGINEERING AND SCIENCE, Bd. 46, 2006, Seiten 1196-1203, XP002738389, in der Anmeldung erwähnt
- DATABASE WPI Week 200713 Thomson Scientific, London, GB; AN 2007-125006 XP002738390, & CN 1 844 193 A (UNIV HUAQIAO) 11. Oktober 2006 (2006-10-11)

## Beschreibung

Die vorliegende Erfindung betrifft ein Verfahren zur Herstellung eines thermoplastischen Copolymers aus Polycaprolactam und thermoplastischem Polyurethan (TPU), mittels dieses Verfahrens erhaltene thermoplastische Copolymere sowie aus derartigen Copolymeren hergestellte Formkörper.
Durch Copolymerisation von mindestens zwei Polymeren in Schmelze können Copolymere erhalten werden, deren chemische und/oder mechanische Eigenschaften gegenüber den ursprünglich eingesetzten Polymeren verbessert sind. Eine Copolymerisation einer Schmelze von mindestens zwei Polymeren ist auch dann möglich, wenn die als Ausgangsstoffe eingesetzten Polymere lediglich teilmischbar oder nicht-mischbar sind, da die dabei entstehenden Copolymere als Verträglichkeitsvermittler zwischen den eingesetzten teil- bzw. nicht-mischbaren Polymeren wirken, welche eine Reduktion der Grenzflächenspannung an der Phasengrenze zwischen den teil- bzw. nicht-mischbarer Polymeren ermöglichen und die Adhäsion zwischen den teil- bzw. nicht-mischbaren Polymeren erhöhen.
G.S. Yang et. al., "Preparation and characterisation of thermoplastic polyurethane elastomer and polyamide 6 blends by in situ anionic ring-opening polymerization of epsilon-caprolactam", Polymer Engineering and Science 2006, 46, S. 1196-1203 und G.S. Yang et. al. "A novel approach to the preparation of thermoplastic polyurethane elastomer and polyamide 6 blends by in situ anionic ring-opening polymerisation of epsilon-caprolactam", Polym. Int. 2006, 55, Seiten 643-649 offenbaren die Herstellung von Blends aus Polycaprolactam und thermoplastischem Polyether-basiertem Polyurethanelastomer (TPEU). Diese Blends werden erhalten, indem zu einer eine Temperatur von 160 °C aufweisenden Mischung aus Caprolactam und einem TPEU basierend auf Poly(tetramethylenetherglycol) und Methylendiphenyldiisocyanat (MDI) Natrium-Caprolactam als Polymerisationskatalysator zugegeben wird. Diese Mischung wird für 30 min auf 160 °C gehalten, und die Polymerisation wird bei einer Temperatur von 180 °C für 60 min durchgeführt. Das von G.S. Yang et. al. beschriebene Verfahren hat den Nachteil, dass die Polymerisation bei einer relativ hohen Temperatur und für einen relativ langen Zeitraum durchgeführt wird. Ein weiterer Nachteil dieses Verfahrens ist, dass der so erhaltene Blend aufwändig aufgearbeitet werden muss mittels Extraktion in THF, Auflösen in Ameisensäure und mehrfachem Ausfällen mit einem Überschuss an THF, um aus dem Blend ein auf TPEU und Polycaprolactam basierendes Copolymer zu isolieren. Des Weiteren verschlechtern sich die mechanischen Eigenschaften Biegemodul und Biegefestigkeit des auf TPEU und Polycaprolactam basierenden Copolymers mit zunehmendem Gehalt an TPEU.
DE 10 2006 036 539 A1 offenbart ein Verfahren zur Herstellung thermoplastisch verarbeitbarer Formmassen aus einem Gemisch aus Polyamid und thermoplastischem Polyurethan. Die Formmassen werden hergestellt mittels in situ-Polymerisation einer Schmelze enthaltend C4-C12 Lactam beziehungsweise Lactamgemisch und thermoplastisches Polyurethan in Gegenwart eines basischen Katalysators bei einer Temperatur im Bereich von 180 bis 260 °C. Bei dieser Polymerisation werden Copolymere aus Polyamid und thermoplastischem Polyurethan gebildet. In bevorzugten Ausführungsbeispielen wird zu einer eine Temperatur von 100 °C aufweisenden Mischung aus Laurinlactam alleine oder in Kombination mit Caprolactam und einem auf Polycaprolacton und Methylendiphenyldiisocyanat (MDI) basierenden thermoplastischen Polyurethan Natriumacetanilid als Polymerisationskatalysator zugegeben, und die Polymerisation wird durch Erhöhung der Temperatur der Mischung auf 225 bis 240°C eingeleitet. Das Verfahren gemäß DE 10 2006 036 539 A1 hat den Nachteil, dass die Polymerisation bei einer relativ hohen Temperatur durchgeführt wird.

Es ist eine Aufgabe der vorliegenden Erfindung, ein verbessertes Verfahren zur Herstellung von Copolymeren aus Polycaprolactam und thermoplastischem Polyurethan bereitzustellen.

Es wurde überraschend gefunden, dass diese Aufgabe durch ein Verfahren zur Herstellung eines thermoplastischen Copolymers aus Polycaprolactam und thermoplastischem Polyurethan gelöst wird, in welchem ein spezielles thermoplastisches Polyurethan eingesetzt wird, welches eine besonders vorteilhafte, niedrige Polymerisationstemperatur ermöglicht.

Daher betrifft die vorliegende Erfindung ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem Diisocyanat ausgewählt aus der Gruppe bestehend aus aliphatischen Diisocyanaten, aromatischen Diisocyanaten und einem Gemisch aus zwei oder mehr davon;
   (ii) einem Diol ausgewählt aus der Gruppe bestehend aus aliphatischen Diolen, aromatischen Diolen und einem Gemisch aus zwei oder mehr davon; und
   (iii) einem Polyether ausgewählt aus der Gruppe bestehend aus aliphatischen Polyethern, aromatischen Polyethern und einem Gemisch aus zwei oder mehr davon basierenden Polyurethans mit einer Schmelztemperatur T₀;
c) Herstellen einer flüssigen Mischung einer Temperatur T₁ enthaltend das Caprolactam und das thermoplastische Polyurethan;
d) Zugeben eines Polymerisationskatalysators zur flüssigen Mischung gemäß c) unter Erhalt einer Mischung enthaltend das Caprolactam und das thermoplastische Polyurethan in einem Massenverhältnis von Caprolactam zu thermoplastischem Polyurethan von mehr als 3:1, und Polymerisieren bei einer Temperatur T₂ von höchstens 175 °C unter Erhalt des thermoplastischen Copolymers.

Es wurde überraschend gefunden, dass durch die Bereitstellung des speziellen thermoplastischen Polyurethans gemäß b) das Polymerisieren gemäß d) bei einer besonders vorteilhaften, niedrigen Polymerisationstemperatur T₂ von höchstens 175 °C ermöglicht wird, ohne dass es zu störenden Kristallisationen und/oder Ausfällungen in der Polymerisationsmischung kommt. Zudem werden dank der im Vergleich zum Stand der Technik niedrigeren Polymerisationstemperatur T₂ unerwünschte Nebenreaktionen, welche bei höheren Polymerisationstemperaturen auftreten können, vermieden. Demnach entstehen vorteilhafterweise weniger Nebenprodukte, wodurch die Ausbeute des Verfahrens erhöht wird und die Aufreinigung des Endprodukts erleichtert wird.

Es ist eine weitere Aufgabe der vorliegenden Erfindung, Copolymere aus Polycaprolactam und thermoplastischem Polyurethan mit verbesserten mechanischen Eigenschaften bereitzustellen.

Es wurde überraschend gefunden, dass diese Aufgabe durch eine spezielle Auswahl des thermoplastischen Polyurethan als Bestandteil des erfindungsgemäßen, auf Polycaprolactam und einem thermoplastischen Polyurethan basierenden Copolymers gelöst werden kann. Dieses spezielle thermoplastische Polyurethan ermöglicht eine vorteilhafte Einstellung der mechanischen Eigenschaften des erfindungsgemäßen Copolymers.

Daher betrifft die vorliegende Erfindung außerdem ein thermoplastisches Copolymer, welches basiert auf Polycaprolactam und einem auf
(i) mindestens einem bevorzugt aliphatischen Diisocyanat;
(ii) einem Diol ausgewählt aus der Gruppe bestehend aus aliphatischen Diolen, aromatischen Diolen und einem Gemisch aus zwei oder mehr davon; und
(iii) einem Polyether ausgewählt aus der Gruppe bestehend aus aliphatischen Polyethern, aromatischen Polyethern und einem Gemisch aus zwei oder mehr davon basierenden thermoplastischen Polyurethan,
wobei das Copolymer das thermoplastische Polyurethan in einer Menge von weniger als 25 Gew.-% (Gewichts-%), bezogen auf die Summe der Gewichte des im Copolymer enthaltenen Caprolactams und thermoplastischen Polyurethans, enthält.

Zudem ist es eine weitere Aufgabe der vorliegenden Erfindung, aus thermoplastischen Copolymeren basierend auf Polycaprolactam und thermoplastischem Polyurethan hergestellte Formkörper mit verbesserten mechanischen Eigenschaften bereitzustellen.

Es wurde überraschend gefunden, dass diese Aufgabe durch einen Formkörper, welcher aus dem erfindungsgemäßen Copolymer hergestellt ist, gelöst wird.

Daher betrifft die vorliegende Erfindung zudem einen Formkörper, welcher hergestellt oder herstellbar ist aus dem erfindungsgemäßen thermoplastischen Copolymer.

### Schritt a)

Die Bereitstellung gemäß a) unterliegt grundsätzlich keiner besonderen Beschränkung. Beispielsweise kann das Caprolactam gemäß a) in festem Zustand, zum Beispiel in Form eines Pulvers oder Granulats, bereitgestellt werden. Alternativ kann das Caprolactam in geschmolzenem Zustand bereitgestellt werden, wobei das Caprolactam bevorzugt bei einer Temperatur von mindestens 80 °C, weiter bevorzugt im Bereich von 100 bis 175 °C, weiter bevorzugt von 100 bis 160 °C, weiter bevorzugt von 110 bis 150 °C, geschmolzen wird. Bevorzugt wird gemäß a) das Caprolactam in festem oder geschmolzenem Zustand, weiter bevorzugt in geschmolzenem Zustand bereitgestellt.

### Schritt b)

Die aliphatischen Diisocyanate gemäß (i) sind bevorzugt ausgewählt aus der Gruppe bestehend aus C1- bis C20-Alkylendiisocyanaten und einem Gemisch aus zwei oder mehr davon, weiter bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MD1), 1-Isocyanato-3-isocyanatomethyl-3,5,5-trimethylcyclohexan (IPDI) und einem Gemisch aus zwei oder mehr davon.

Beispielsweise sind die C1- bis C20-Alkylendiisocyanate ausgewählt aus der Gruppe bestehend aus C1-, C2-, C3-, C4-, C5-, C6-, C7-, C8-, C9-, C10-, C11-, C12-, C13-, C14-, C15-, C16-, C17-, C18-, C19-, C20-Alkylendiisocyanat und einem Gemisch aus zwei oder mehr davon, und die C6- bis C13-Alkylendiisocyanate sind ausgewählt aus der Gruppe bestehend aus C6-, C7-, C8-, C9-, C10-, C11-, C12-, C13-Alkylendiisocanat und einem Gemisch aus zwei oder mehr davon.

Die aromatischen Diisocyanate gemäß (i) sind bevorzugt ausgewählt aus der Gruppe bestehend aus C6- bis C20-Arylendiisocyanaten, C6- bis C20-Arylenalkylendiisocyanaten und einem Gemisch aus zwei oder mehr davon, weiter bevorzugt aus der Gruppe bestehend aus C6- bis C18-Arylendiisocyanaten, C6- bis C18-Arylenalkylendiisocyanaten und einem Gemisch aus zwei oder mehr davon, weiter bevorzugt aus der Gruppe bestehend aus C6- bis C14-Arylendiisocyanaten, C6- bis C14-Arylenalkylendiisocyanaten und einem Gemisch aus zwei oder mehr davon, weiter bevorzugt aus der Gruppe bestehend aus 4,4'-Methylendiphenyldiisocyanat (MDI), Toluol-2,4-diisocyanat (TDI) und einem Gemisch davon.

Beispielsweise sind die C6- bis C20-Arylen- und Arylenalkylendiisocyanate ausgewählt aus der Gruppe bestehend aus C6-, C7-, C8-, C9-, C10-, C11-, C12-, C13-, C14-, C15-, C16-, C17-, C18-, C19-, C20-Arylen- und Arylenalkylendiisocyanaten und einem Gemisch aus zwei oder mehr davon, und die C6- bis C14-Arylen- und Arylenalkylendiisocyanaten sind ausgewählt aus der Gruppe bestehend aus C6-, C7-, C8-, C9-, C10-, C11-, C12-, C13-, C14- Arylen- und Arylenalkylendiisocyanaten und einem Gemisch aus zwei oder mehr davon.

Die aliphatischen Diole gemäß (ii) sind bevorzugt ausgewählt aus der Gruppe bestehend aus C1- bis C20-Alkylendiolen und einem Gemisch aus zwei oder mehr davon, weiter bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon.

Beispielsweise sind die C1- bis C20-Alkylendiole ausgewählt aus der Gruppe bestehend aus C1-, C2-, C3-, C4-, C5-, C6-, C7-, C8-, C9-, C10-, C11-, C12-, C13-, C14-, C15-, C16-, C17-, C18-, C19-, C20-Alkylendiol und einem Gemisch aus zwei oder mehr davon, und die C3- bis C8-Alkylendiole sind ausgewählt aus der Gruppe bestehend aus C3-, C4-, C5-, C6-, C7-, C8-Alkylendiol und einem Gemisch aus zwei oder mehr davon.

Die aromatischen Diole gemäß (ii) sind bevorzugt ausgewählt aus der Gruppe bestehend aus C6- bis C20-Arylendiolen, C6- bis C20-Arylenalkylendiolen und einem Gemisch aus zwei oder mehr davon, bevorzugt aus der Gruppe bestehend aus C6- bis C18-Arylendiolen, C6- bis C18-Arylenalkylendiolen und einem Gemisch aus zwei oder mehr davon, weiter bevorzugt aus der Gruppe bestehend aus C6- bis C14-Arylendiolen, C6- bis C14-Arylenalkylendiolen und einem Gemisch aus zwei oder mehr davon.

Beispielsweise sind die C6- bis C20-Arylen- und Arylenalkylendiole ausgewählt aus der Gruppe bestehend aus C6-, C7-, C8-, C9-, C10-, C11-, C12-, C13-, C14-, C15-, C16-, C17-, C18-, C19-, C20-Arylen- und Arylenalkylendiolen und einem Gemisch aus zwei oder mehr davon, und die C6- bis C14-Arylen- und Arylenalkylendiole sind ausgewählt aus der Gruppe bestehend aus C6-, C7-, C8-, C9-, C10-, C11-, C12-, C13-, C14- Arylen- und Arylenalkylendiolen und einem Gemisch aus zwei oder mehr davon.

Die aliphatischen Polyether gemäß (iii) sind bevorzugt ausgewählt aus der Gruppe bestehend aus Poly(C1- bis C20-alkylen)ethern und einem Gemisch aus zwei oder mehr davon, weiter bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der aliphatische Polyether gemäß (iii) weiter bevorzugt Polytetrahydrofuran ist.

Beispielsweise sind die Poly(C1- bis C20-alkylen)ether ausgewählt aus der Gruppe bestehend aus Poly(C1-alkylen)ether, Poly(C2-alkylen)ether, Poly(C3-alkylen)ether, Poly(C4-alkylen)ether, Poly(C5-alkylen)ether, Poly(C6-alkylen)ether, Poly(C7-alkylen)ether, Poly(C8-alkylen)ether, Poly(C9-alkylen)ether, Poly(C10-alkylen)ether, Poly(C11-alkylen)ether, Poly(C12-alkylen)ether, Poly(C13-alkylen)ether, Poly(C14-alkylen)ether, Poly(C15-alkylen)ether, Poly(C16-alkylen)ether, Poly(C17-alkylen)ether, Poly(C18-alkylen)ether, Poly(C19-alkylen)ether, Poly(C20-alkylen)ether und einem Gemisch aus zwei oder mehr davon, und die Poly(C2- bis C6-alkylen)ether sind ausgewählt aus der Gruppe bestehend aus Poly(C2-alkylen)ether, Poly(C3-alkylen)ether, Poly(C4-alkylen)ether, Poly(C5-alkylen)ether, Poly(C6-alkylen)ether und einem Gemisch aus zwei oder mehr davon.

Die aromatischen Polyether gemäß (iii) sind bevorzugt ausgewählt aus der Gruppe bestehend aus Poly(C6- bis C20-arylen)ethern, Poly(C6- bis C20-arylenalkylen)ethern und einem Gemisch aus zwei oder mehr davon, weiter bevorzugt aus der Gruppe bestehend aus Poly(C6- bis C18-arylen)ethern, Poly(C6- bis C18-arylenalkylen)ethern und einem Gemisch aus zwei oder mehr davon, weiter bevorzugt aus der Gruppe bestehend aus Poly(C6- bis C14-arylen)ethern, Poly(C6- bis C14-arylenalkylen)ethern und einem Gemisch aus zwei oder mehr davon.

Beispielsweise sind die Poly(C6- bis C20-arylen)ether ausgewählt aus der Gruppe bestehend aus Poly(C6-arylen)ether, Poly(C7-arylen)ether, Poly(C8-arylen)ether, Poly(C9-arylen)ether, Poly(C10-arylen)ether, Poly(C11-arylen)ether, Poly(C12-arylen)ether, Poly(C13-arylen)ether, Poly(C14-arylen)ether, Poly(C15-arylen)ether, Poly(C16-arylen)ether, Poly(C17-arylen)ether, Poly(C18-arylen)ether, Poly(C19-arylen)ether, Poly(C20-arylen)ether und einem Gemisch aus zwei oder mehr davon, und die Poly(C6- bis C14-arylen)ether sind ausgewählt aus der Gruppe bestehend aus Poly(C6-arylen)ether, Poly(C7-arylen)ether, Poly(C8-arylen)ether, Poly(C9-arylen)ether, Poly(C10-arylen)ether, Poly(C11-arylen)ether, Poly(C12-arylen)ether, Poly(C13-arylen)ether, Poly(C14-arylen)ether und einem Gemisch aus zwei oder mehr davon.

Beispielsweise sind die Poly(C6- bis C20-arylenalkylen)ether ausgewählt aus der Gruppe bestehend aus Poly(C6-arylenalkylen)ether, Poly(C7-arylenalkylen)ether, Poly(C8-arylenalkylen)ether, Poly(C9-arylenalkylen)ether, Poly(C10-arylenalkylen)ether, Poly(C11-arylenalkylen)ether, Poly(C12-arylenalkylen)ether, Poly(C13-arylenalkylen)ether, Poly(C14-arylenalkylen)ether, Poly(C15-arylenalkylen)ether, Poly(C16-arylenalkylen)ether, Poly(C17-arylenalkylen)ether, Poly(C18-arylenalkylen)ether, Poly(C19-arylenalkylen)ether, Poly(C20-arylenalkylen)ether und einem Gemisch aus zwei oder mehr davon, und die Poly(C6- bis C14-arylenalkylen)ether sind ausgewählt aus der Gruppe bestehend aus Poly(C6-arylenalkylen)ether, Poly(C7-arylenalkylen)ether, Poly(C8-arylenalkylen)ether, Poly(C9-arylenalkylen)ether, Poly(C10-arylenalkylen)ether, Poly(C11-arylenalkylen)ether, Poly(C12-arylenalkylen)ether, Poly(C13-arylenalkylen)ether, Poly(C14-arylenalkylen)ether und einem Gemisch aus zwei oder mehr davon.

Die für die jeweiligen Alkylenreste, Arylenreste und Arylenalkylenreste des Diisocyanats gemäß (i), des Diols gemäß (ii) und des Polyethers gemäß (iii) angegebene Anzahl der Kohlenstoffatome bezieht sich auf die Gesamtzahl der Kohlenstoffatome des Alkylen-, Arylen- und Arylenalkylenrests. So ist beispielsweise unter "C20-Alkylen" ein Alkylenrest zu verstehen, der 20 Kohlenstoffatome aufweist.

Die Alkylenreste, Arylenreste und Arylenalkylenreste des Diisocyanats gemäß (i), des Diols gemäß (ii) und des Polyethers gemäß (iii) unterliegen keiner besonderen Beschränkung und können jeweils grundsätzlich substituiert oder unsubstituiert sein. Beispielsweise sind die substituierten Alkylenreste, Arylenreste und Alkylenarylenreste bevorzugt mit mindestens einem Substituenten, weiter bevorzugt mit ein bis drei Substituenten, weiter bevorzugt mit einem Substituenten substituiert. Die Substituenten können verschieden oder identisch sein. Die Substituenten müssen sich unter den Bedingungen gemäß Schritt c) oder d) inert verhalten, weshalb zum Beispiel Alkylreste bevorzugt sind. Weiter bevorzugt sind C1-C6 Alkylreste, weiter bevorzugt C1-C3 Alkylreste.

Bevorzugt sind die Alkylenreste, Arylenreste und Arylenalkylenreste des Diisocyanats gemäß (i), des Diols gemäß (ii) und des Polyethers gemäß (iii) unsubstituiert.

Unter dem Begriff "Arylenalkylen" ist ein aus mindestens einer Arylengruppe und mindestens einer Alkylengruppe bestehender Rest zu verstehen. Der "Arylenalkylen"-Rest unterliegt keiner besonderen Beschränkung. Beispielsweise sind C13-Arylenalkylen-Reste bevorzugt ausgewählt aus Diphenylmethanen, wie zum Beispiel 2,2'-Diphenylmethan, 2,4'-Diphenylmethan oder 4,4'- Diphenylmethan.

Bevorzugt weist der Polyether gemäß (iii) ein Zahlenmittel des Molekulargewichts (Mₙ) im Bereich von 300 bis 8.000 g, weiter bevorzugt von 600 bis 4.500 g, weiter bevorzugt von 800 bis 2.500 g auf.

Bevorzugt basiert das thermoplastische Polyurethan gemäß b) auf einem Diisocyanat gemäß (i) ausgewählt aus der Gruppe bestehend aus C1- bis C20-Alkylendiisocyanaten, C6- bis C20-Arylendiisocyanaten, C6- bis C20-Arylenalkylendiisocyanaten und einem Gemisch aus zwei oder mehr davon, einem Diol gemäß (ii) ausgewählt aus der Gruppe bestehend aus C1- bis C20-Alkylendiolen, C6- bis C20-Arylendiolen, C6- bis C20-Arylenalkylendiolen und einem Gemisch aus zwei oder mehr davon und einem Polyether gemäß (iii) mit einem Zahlenmittel des Molekulargewichts (Mₙ) im Bereich von 300 bis 8.000 g ausgewählt aus der Gruppe bestehend aus Poly(C1- bis C20-alkylen)ethern, Poly(C6- bis C20-arylen)ethern, Poly(C6- bis C20-arylenalkylen)ethern und einem Gemisch aus zwei oder mehr davon. Weiter bevorzugt basiert das thermoplastische Polyurethan gemäß b) auf einem Diisocyanat gemäß (i) ausgewählt aus der Gruppe bestehend aus C6- bis C13-Alkylendiisocyanaten, C6- bis C14-Arylendiisocyanaten, C6- bis C14-Arylenalkylendiisocyanaten und einem Gemisch aus zwei oder mehr davon, einem Diol gemäß (ii) ausgewählt aus der Gruppe bestehend aus C4- bis C6-Alkylendiolen, C6- bis C14-Arylendiolen, C6- bis C14-Arylenalkylendiolen und einem Gemisch aus zwei oder mehr davon und einem Polyether gemäß (iii) mit einem Zahlenmittel des Molekulargewichts (Mₙ) im Bereich von 600 bis 4.500 g ausgewählt aus der Gruppe bestehend aus Poly(C2- bis C6-alkylen)ethern, Poly(C6- bis C14-arylen)ethern, Poly(C6- bis C14-arylenalkylen)ethern und einem Gemisch aus zwei oder mehr davon. Weiter bevorzugt basiert das thermoplastische Polyurethan gemäß b) auf einem Diisocyanat gemäß (i) ausgewählt aus der Gruppe bestehend aus 1,6-Hexamethylendiisocyanat (HDI), 4,4'-Diisocyanatodicyclohexylmethan (H12MD1), 1-Isocyanato-3-isocyanatomethyl-3,5,5-trimethylcyclohexan (IPDI), 4,4'-Methylendiphenyldiisocyanat (MDI), Toluol-2,4-diisocyanat (TDI) und einem Gemisch aus zwei oder mehr davon, einem Diol gemäß (ii) ausgewählt aus der Gruppe bestehend aus 1,4-Butandiol, 1,6-Hexandiol und einem Gemisch davon und einem Polyether gemäß (iii) ausgewählt aus Polytetrahydrofuran mit einem Zahlenmittel des Molekulargewichts (Mₙ) im Bereich von 800 bis 2.500 g. Weiter bevorzugt basiert das thermoplastische Polyurethan gemäß b) auf (i) 1,6-Hexamethylendiisocyanat (HDI), 4,4'-Diisocyanatodicyclohexylmethan (H12MDI) oder 4,4'-Methylendiphenyldiisocyanat (MDI), (ii) 1,4-Butandiol oder 1,6-Hexandiol, und (iii) Polytetrahydrofuran mit einem Zahlenmittel des Molekulargewichts (Mₙ) im Bereich von 800 bis 2.500 g.

Bevorzugt sind mindestens eine, weiter bevorzugt mindestens zwei, weiter bevorzugt sämtliche der Komponenten Diisocyanat (i), Diol (ii) und Polyether (iii) aliphatisch. Weiter bevorzugt weisen die aliphatischen Komponenten (i), (ii) und (iii) einen linearen und/oder cyclischen Alkylenrest auf, weiter bevorzugt weist das Diisocyanat (i) einen linearen und/oder cyclischen Alkylenrest, das Diol (ii) einen linearen Alkylenrest und der Polyalkylenether (iii) einen linearen Alkylenrest auf.

Unter dem hier verwendeten Begriff "linearer und cyclischer Alkylenrest" ist ein Alkylenrest zu verstehen, welcher aus mindestens einem linearen und mindestens einem cyclischen Alkylenrest zusammengesetzt ist, wie z.B. der Dicyclohexylmethanrest von 4,4'-Diisocyanatodicyclohexylmethan (H12MDI).

Das thermoplastische Polyurethan gemäß b) weist bevorzugt ein Zahlenmittel des Molekulargewichts (Mₙ) im Bereich von 10.000 bis 300.000 g, weiter bevorzugt von 15.000 bis 200.000 g, weiter bevorzugt von 19.000 bis 160.000 g auf.

Die Schmelztemperatur T₀ des thermoplastischen Polyurethans gemäß b) liegt bevorzugt im Bereich von 155 bis 280 °C, weiter bevorzugt von 160 bis 250 °C, weiter bevorzugt von 170 bis 230 °C.

### Schritt c)

Unter dem Begriff "flüssige Mischung", wie er gemäß c) verwendet wird, ist eine Mischung zu verstehen, in welcher das thermoplastische Polyurethan bei der Temperatur T₁ im geschmolzenen Caprolactam gelöst ist. Sollte die Temperatur T₁ größer oder gleich der Schmelztemperatur T₀ sein, so wird zumindest ein Teil des thermoplastischen Polyurethans aufgeschmolzen und liegt somit in flüssigem Zustand in der Mischung vor, ohne dass es eines Lösens durch das geschmolzene Caprolactam bedarf.

Das Herstellen der flüssigen Mischung gemäß c) unterliegt keiner besonderen Beschränkung. Es ist bevorzugt, dass T₁ kleiner oder gleich T₀. Weiter bevorzugt liegt T₁ im Bereich von 100 bis 175 °C, weiter bevorzugt von 100 bis 160 °C, weiter bevorzugt von 110 bis 150 °C. Somit kann die Mischung gemäß c) bei einer vorteilhaft niedrigen Temperatur T₁ bereitgestellt werden, welche sowohl einen verringerten Energieverbrauch für diesen Verfahrensschritt ermöglicht als auch die Entstehung von unerwünschten Nebenprodukten bereits vor dem Polymerisieren gemäß d) wirksam verhindert.

### Schritt d)

Überraschenderweise kann das Polymerisieren gemäß d) aufgrund der spezifischen chemischen Natur des thermoplastischen Polyurethans gemäß b) innerhalb eines breiten Temperaturbereichs für die Polymerisationstemperatur T₂ bei vorteilhaft hohen Polymerisationsgeschwindigkeiten durchgeführt werden. Bevorzugt liegt gemäß d) die Temperatur T₂ im Bereich von 100 bis 175 °C, weiter bevorzugt von 115 bis 170 °C, weiter bevorzugt von 130 bis 160 °C. Des Weiteren ist es bevorzugt, dass T₂ größer oder gleich T₁ ist, wobei die Temperaturdifferenz T₂ - T₁ weiter bevorzugt im Bereich von 0 bis 40 °C, weiter bevorzugt von 0 bis 30 °C, weiter bevorzugt von 0 bis 20 °C liegt.

Bevorzugt liegt die Temperatur T₂ im Bereich von 100 bis 175 °C, und die Temperaturdifferenz T₂ - T₁ liegt bevorzugt im Bereich von 0 bis 40 °C. Weiter bevorzugt liegt die Temperatur T₂ im Bereich von 130 bis 160 °C, und die Temperaturdifferenz T₂ - T₁ liegt im Bereich von 0 bis 20 °C. Alternativ ist es bevorzugt, dass die Temperatur T₂ im Bereich von 100 bis 175 °C liegt und T₁ im Bereich von 100 bis 175 °C liegt, weiter bevorzugt liegt die Temperatur T₂ im Bereich von 130 bis 160 °C und T₁ liegt im Bereich von 110 bis 150°C.

Es wurde überraschend gefunden, dass das Polymerisieren gemäß d) mit einem Salz von Caprolactam als Polymerisationskatalysator mit einer vorteilhaft hohen Polymerisationsgeschwindigkeit durchgeführt werden kann. Daher ist der Polymerisationskatalysator gemäß d) bevorzugt ein Salz von Caprolactam, weiter bevorzugt ein Alkali- oder Erdalkalimetallsalz von Caprolactam, weiter bevorzugt ein Alkalimetallsalz von Caprolactam, weiter bevorzugt das Natriumsalz oder das Kaliumsalz von Caprolactam, weiter bevorzugt das Natriumsalz von Caprolactam.

Bevorzugt wird gemäß d) der Polymerisationskatalysator in einer Menge im Bereich von 0,2 bis 4 Gew.-%, bevorzugt von 0,4 bis 3,4 Gew.-%, weiter bevorzugt von 0,6 bis 3 Gew.-%, bezogen auf die Summe der Gewichte des Caprolactams und des thermoplastischen Polyurethans, zugegeben.

Optional wird gemäß d) zusätzlich ein Polymerisationsaktivator zugegeben. Bevorzugt wird der Polymerisationsaktivator zugegeben, wenn gemäß b) ein thermoplastisches Polyurethan bereitgestellt wird, welches auf einem aromatischen Diisocyanat, einem aromatischen Diol oder einem aromatischen Polyether basiert. Es wurde überraschend gefunden, dass im Falle der Bereitstellung eines auf einem aromatischen Diisocyanat, einem aromatischen Diol oder einem aromatischen Polyether basierenden thermoplastischen Polyurethans das Polymerisieren gemäß d) durch Zugabe eines Polymerisationsaktivators mit einer vorteilhaft hohen Polymerisationsgeschwindigkeit durchgeführt werden kann.

Der Polymerisationsaktivator ist bevorzugt ausgewählt aus der Gruppe bestehend aus mit einer Carbonylgruppe N-substituierten Lactamen, aliphatischen und aromatischen Diisocyanaten, Allophanaten, Polyisocyanaten, aliphatischen und aromatischen Disäurehalogeniden, und einem Gemisch aus zwei oder mehr davon. Weiter bevorzugt ist der Polymerisationsaktivator ausgewählt aus der Gruppe bestehend aus N,N'-C1- bis N,N'-C20-alkylendicarbamoylcaprolactamen, N-Acetyl C3-C10 Lactamen, C2-C16 Alkylendiiso-cyanaten, C5-C12 Arylendiisocyanaten oder C5-C16 Arylenalkylendiisocyanaten, C1-C6 Alkylenallophanaten, C12-C24 Alkylenpolyisocyanaten, C2-C16 Alkylendisäurehalogeniden, C5-C12 Arylendisäurehalogeniden, C5-C16 Arylenalkylendisäurehalogeniden, und einem Gemisch aus zwei oder mehr davon. Weiter bevorzugt ist der Polymerisationsaktivator ausgewählt aus der Gruppe bestehend aus N,N'-C3- bis N,N'-C8-Alkylendicarbamoyl-caprolactamen, N-Acetyl C4-C8 Lactamen, C4-C13 Alkylendiisocyanaten, C6-C10 Arylendiisocyanaten oder C7-C10 Arylenalkylendiisocyanaten, C2-C4 Alkylenallophanaten, C16-C20 Alkylenpolyisocyanaten, C4-C13 Alkylendisäurehalogeniden, C6-C10 Arylendisäurehalogeniden, C8-C12 Arylenalkylendisäurehalogeniden, und einem Gemisch aus zwei oder mehr davon. Weiter bevorzugt ist der Polymerisationsaktivator ausgewählt aus der Gruppe bestehend aus N,N'-Hexamethylen-1,6-dicarbamoylcaprolactam, Acetylcaprolactam, Butylendiisocyanat, Hexamethylendiisocyanat, Methylenbis(cyclohexylisocyanat); Toluyl-diisocyanat, Ethylallophanat, Trimervon 1,6-Hexamethylendiisocyanat (HDI), Butylendisäurebromid, Hexamethylendisäurechlorid, 4,4'-Methylenbis(cyclohexylsäure-chlorid, Toluylmethylendisäurechlorid, und einem Gemisch aus zwei oder mehr davon.

Die für die Lactam-, Alkylen-, Arylen- und Arylenalkylenreste des Polymerisationsaktivators angegebene Anzahl der Kohlenstoffatome bezieht sich auf die Gesamtzahl der Kohlenstoffatome des jeweiligen Lactam-, Alkylen-, Arylen- und Arylenalkylenrests. So ist beispielsweise unter "C16-Alkylen" ein Alkylenrest zu verstehen, der 16 Kohlenstoffatome aufweist, und unter "C10 Lactam" ist ein Lactamrest zu verstehen, der 10 Kohlenstoffatome aufweist.

Unter dem Begriff "Arylenalkylen" ist ein aus mindestens einer Arylengruppe und mindestens einer Alkylengruppe bestehender Rest zu verstehen. Der "Arylenalkylen"-Rest unterliegt keiner besonderen Beschränkung. Beispielsweise sind C13-Arylenalkylen-Reste bevorzugt ausgewählt aus Diphenylmethanen, wie zum Beispiel 2,2'-Diphenylmethan, 2,4'-Diphenylmethan oder 4,4'- Diphenylmethan.

Bevorzugt ist der Polymerisationsaktivator aus der Gruppe bestehend aus den N,N'-Alkylendicarbamoylcaprolactamen und einem Gemisch aus zwei oder mehr davon ausgewählt. Weiter bevorzugt ist der Polymerisationsaktivator ausgewählt aus der Gruppe bestehend aus N,N'-C1- bis N,N'-C20-alkylendicarbamoylcaprolactamen und einem Gemisch aus zwei oder mehr davon, weiter bevorzugt aus der Gruppe bestehend aus N,N'-C2- bis N,N'-C12-alkylendicarbamoylcaprolactamen und einem Gemisch aus zwei oder mehr davon, weiter bevorzugt aus der Gruppe bestehend aus N,N'-C3- bis N,N'-C8-alkylendicarbamoylcaprolactamen und einem Gemisch aus zwei oder mehr davon. Weiter bevorzugt ist der Polymerisationsaktivator N,N'-Hexamethylen-1,6-dicarbamoylcaprolactam.

Bevorzugt wird der Polymerisationsaktivator in einer Menge im Bereich von 0,1 bis 15 Gew.-%, weiter bevorzugt von 0,25 bis 10 Gew.-%, weiter bevorzugt von 0,5 bis 6 Gew.-%, bezogen auf die Summe der Gewichte des Caprolactams und des thermoplastischen Polyurethans, zugegeben.

Es wurde überraschend gefunden, dass sich die mechanischen Eigenschaften des gemäß d) erhaltenen thermoplastischen Copolymers durch Wahl des Massenverhältnisses Caprolactam : thermoplastischem Polyurethan in vorteilhafter Weise einstellen lassen. Bevorzugt wird gemäß d) der Polymerisationskatalysator zur flüssigen Mischung gemäß c) zugegeben, so dass eine Mischung enthaltend das Caprolactam und das thermoplastische Polyurethan in einem Massenverhältnis von Caprolactam zu thermoplastischem Polyurethan im Bereich von 399:1 bis 4:1, bevorzugt 199:1 bis 5:1, weiter bevorzugt 99:1 bis 7:1 erhalten wird.

Das gemäß d) erhaltene thermoplastische Copolymer weist bevorzugt einen Gehalt von nicht copolymerisiertem Lactam von höchstens 10 Gew.-%, weiter bevorzugt von höchstens 7 Gew.-%, weiter bevorzugt von höchstens 5 Gew.-%, bezogen auf die Summe der Gewichte des thermoplastischen Copolymers und des nicht copolymerisierten Lactams, auf.

Bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat;
   (ii) einem C3- bis C8-Alkylendiol; und
   (iii) einem Poly(C2- bis C6-alkylen)ether mit einem Zahlenmittel des Molekular-gewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 160 °C enthaltend das Caprolactam und das thermoplastische Polyurethan;
d) Zugeben eines Alkali- oder Erdalkalimetallsalzes von Caprolactam als Polymerisationskatalysator in einer Menge im Bereich von 0,4 bis 3,4 Gew.-%, bezogen auf die Summe der Gewichte des Caprolactams und des thermoplastischen Polyurethans, zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 399:1 bis 4:1, und Polymerisieren bei einer Temperatur T₂ im Bereich von 115 bis 170 °C unter Erhalt des thermoplastischen Copolymers.

Bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat oder C8- bis C20-Arylenalkylendiisocyanat;
   (ii) einem C3- bis C8-Alkylendiol; und
   (iii) einem Poly(C2- bis C6-alkylen)ether mit einem Zahlenmittel des Molekulargewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 160 °C enthaltend das Caprolactam und das thermoplastische Polyurethan;
d) Zugeben eines Alkali- oder Erdalkalimetallsalzes von Caprolactam als Polymerisationskatalysator in einer Menge im Bereich von 0,4 bis 3,4 Gew.-%, bezogen auf die Summe der Gewichte des Caprolactams und des thermoplastischen Polyurethans, zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 399:1 bis 4:1, und Polymerisieren bei einer Temperatur T₂ im Bereich von 115 bis 170 °C unter Erhalt des thermoplastischen Copolymers,
wobei gemäß d) zusätzlich ein Polymerisationsaktivator ausgewählt aus der Gruppe bestehend aus N,N'-C2- bis N,N'-C12-alkylendicarbamoylcaprolactamen und einem Gemisch aus zwei oder mehr davon in einer Menge im Bereich von 0,25 bis 10 Gew.-%, bezogen auf die Summe der Gewichte des Caprolactams und des thermoplastischen Polyurethans, zugegeben wird.

In dem erfindungsgemäßen Verfahren kann das Herstellen gemäß c) und das Zugeben und Polymerisieren gemäß d) als diskontinuierliches oder kontinuierliches Verfahren ausgeführt werden.

### Diskontinuierliche Verfahrensführung

Das erfindungsgemäße Verfahren kann als diskontinuierliches Verfahren durchgeführt werden, wobei das Herstellen gemäß c) und das Zugeben und Polymerisieren gemäß d) als diskontinuierliches Verfahren durchgeführt werden, und wobei gemäß a) das Caprolactam im geschmolzenen Zustand und gemäß b) das thermoplastische Polyurethan im festen Zustand bereitgestellt werden, und die flüssige Mischung gemäß c) durch Zugabe des thermoplastischen Polyurethans zu Caprolactam im geschmolzenen Zustand bereitgestellt wird.

In diesem diskontinuierlichen Verfahren ist es bevorzugt, dass die Mischung gemäß c) für einen Zeitraum im Bereich von 1 min bis 1,5 h, weiter bevorzugt von 10 min bis 70 min, weiter bevorzugt von 20 min bis 60 min bei der Temperatur T₁ gehalten wird.

Es wurde überraschend gefunden, dass sich dieses diskontinuierliche Verfahren besonders dazu eignet, das Polymerisieren gemäß d) in einer Form unter Erhalt eines Formkörpers durchzuführen, wenn der Polymerisationskatalysator in Form einer flüssigen Mischung enthaltend Polymerisationskatalysator und Caprolactam zugegeben wird. Daher ist es bevorzugt, dass gemäß d) der Polymerisationskatalysator in Form einer flüssigen Mischung enthaltend Polymerisationskatalysator und Caprolactam zugegeben wird.

Unter dem Begriff "flüssige Mischung enthaltend Polymerisationskatalysator und Caprolactam" ist eine Mischung zu verstehen, in welcher der Polymerisationskatalysator in geschmolzenem, flüssigem Caprolactam gelöst oder dispergiert ist.

Bevorzugt wird diese flüssige Mischung enthaltend Polymerisationskatalysator und Caprolactam durch Zugabe des Polymerisationskatalysators zu Caprolactam im geschmolzenen Zustand bereitgestellt.

Die flüssige Mischung enthaltend Polymerisationskatalysator und Caprolactam enthält den Polymerisationskatalysator bevorzugt in einer Menge im Bereich von 2 bis 40 Gew.-%, weiter bevorzugt von 4 bis 34 Gew.-%, weiter bevorzugt von 6 bis 30 Gew.-%, bezogen auf das Gewicht des Caprolactams.

Bevorzugt wird die flüssige Mischung enthaltend Polymerisationskatalysator und Caprolactam für einen Zeitraum im Bereich von 1 min bis 1,5 h, weiter bevorzugt von 10 min bis 70 min, weiter bevorzugt von 20 bis 60 min bei der Temperatur T₃ gehalten.

Die Temperatur T₃ unterliegt generell keinen Beschränkungen. Bevorzugt liegt T₃ im Bereich von 100 bis 175 °C, weiter bevorzugt von 105 bis 155 °C, weiter bevorzugt von 110 bis 130 °C.

Gemäß d) kann optional zusätzlich ein Polymerisationsaktivator zugegeben werden, wobei der Polymerisationsaktivator bevorzugt der Mischung gemäß c) zugegeben wird. Bevorzugt wird der Polymerisationsaktivator der Mischung gemäß c) in einer Menge im Bereich von 1 bis 30 Gew.-%, weiter bevorzugt von 2 bis 24 Gew.-%, weiter bevorzugt von 4 bis 18 Gew.-%, bezogen auf die Summe der Gewichte des Caprolactams und des thermoplastischen Polyurethans, zugegeben.

Bevorzugt werden gemäß d) die flüssige Mischung enthaltend Polymerisationskatalysator und Caprolactam zur flüssigen Mischung gemäß c) in einem Massenverhältnis von Mischung enthaltend Polymerisationskatalysator und Caprolactam zu Mischung gemäß c) im Bereich von 1:4 bis 3:1, weiter bevorzugt von 1:3 bis 2:1, weiter bevorzugt von 1:1,5 bis 1,5:1 gemischt. Die flüssige Mischung enthaltend Polymerisationskatalysator und Caprolactam und die flüssige Mischung gemäß c) werden bevorzugt bei einer Temperatur T₄ gemischt. Bevorzugt liegt die Temperatur T₄ im Bereich von 100 bis 175 °C, weiter bevorzugt von 105 bis 155 °C, weiter bevorzugt von 110 bis 130 °C.

Bevorzugt wird das Polymerisieren gemäß d) für einen Zeitraum im Bereich von 0,1 bis 45 min, weiter bevorzugt von 0,3 bis 30 min, weiter bevorzugt von 0,5 bis 15 min durchgeführt.

Bevorzugt wird in dem oben beschriebenen diskontinuierlichen Verfahren gemäß d) in einer Form polymerisiert, weiter bevorzugt in einer Reaction Injection Molding (RIM) Form.

Bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat;
   (ii) einem C3- bis C8-Alkylendiol; und
   (iii) einem Poly(C2- bis C6-alkylen)ether mit einem Zahlenmittel des Molekulargewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 160 °C enthaltend das Caprolactam und das thermoplastische Polyurethan;
d) Zugeben eines Alkali- oder Erdalkalimetallsalzes von Caprolactam als Polymerisationskatalysator in einer Menge im Bereich von 0,4 bis 3,4 Gew.-%, bezogen auf die Summe der Gewichte des Caprolactams und des thermoplastischen Polyurethans, zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 399:1 bis 4:1, und Polymerisieren bei einer Temperatur T₂ im Bereich von 115 bis 170 °C unter Erhalt des thermoplastischen Copolymers,
wobei das Herstellen gemäß c) und das Zugeben und Polymerisieren gemäß d) als diskontinuierliches Verfahren durchgeführt werden, und wobei gemäß a) das Caprolactam im geschmolzenen Zustand und gemäß b) das thermoplastische Polyurethan im festen Zustand bereitgestellt werden, und die flüssige Mischung gemäß c) durch Zugabe des thermoplastischen Polyurethans zu Caprolactam im geschmolzenen Zustand bereitgestellt wird, wobei gemäß d) der Polymerisationskatalysator bevorzugt in Form einer flüssigen Mischung enthaltend Polymerisationskatalysator und Caprolactam zugegeben wird.

Bevorzugt ist ein Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
   (i) einem C3- bis C18-Alkylendiisocyanat oder einem C6- bis C18-Arylenalkylendiisocyanat;
   (ii) einem C3- bis C8-Alkylendiol; und
   (iii) einem Poly(C2- bis C6-alkylen)ether mit einem Zahlenmittel des Molekulargewichts (Mₙ) im Bereich von 600 bis 4.500 g
      basierenden Polyurethans mit einer Schmelztemperatur T₀ im Bereich von 160 bis 250 °C;
c) Herstellen einer flüssigen Mischung einer Temperatur T₁ im Bereich von 100 bis 160 °C enthaltend das Caprolactam und das thermoplastische Polyurethan;
d) Zugeben eines Alkali- oder Erdalkalimetallsalzes von Caprolactam als Polymerisationskatalysator in einer Menge im Bereich von 0,4 bis 3,4 Gew.-%, bezogen auf die Summe der Gewichte des Caprolactams und des thermoplastischen Polyurethans, zur flüssigen Mischung gemäß c) unter Erhalt einer Mischung enthaltend das Caprolactam und das thermoplastische Polyurethan in einem Massenverhältnis von Caprolactam zu thermoplastischem Polyurethan im Bereich von 399:1 bis 4:1, und Polymerisieren bei einer Temperatur T₂ im Bereich von 115 bis 170 °C unter Erhalt des thermoplastischen Copolymers,
wobei gemäß d) zusätzlich ein Polymerisationsaktivator ausgewählt aus der Gruppe bestehend aus N,N'-C2- bis N,N'-C12-alkylendicarbamoylcaprolactamen und einem Gemisch aus zwei oder mehr davon in einer Menge im Bereich von 0,25 bis 10 Gew.-%, bezogen auf die Summe der Gewichte des Caprolactams und des thermoplastischen Polyurethans, zugegeben wird, wobei das Herstellen gemäß c*) und das Zugeben und Polymerisieren gemäß d) als diskontinuierliches Verfahren durchgeführt werden, und wobei gemäß a) das Caprolactam im geschmolzenen Zustand und gemäß b) das thermoplastische Polyurethan im festen Zustand bereitgestellt werden, und die flüssige Mischung gemäß c) durch Zugabe des thermoplastischen Polyurethans zu Caprolactam im geschmolzenen Zustand bereitgestellt wird, und wobei gemäß d) der Polymerisationskatalysator bevorzugt in Form einer flüssigen Mischung enthaltend Polymerisationskatalysator und Caprolactam zugegeben wird.

Alternativ kann das vorliegende Verfahren als diskontinuierliches Verfahren durchgeführt werden, in welchem das Herstellen gemäß c) und das Zugeben und Polymerisieren gemäß d) als diskontinuierliches Verfahren durchgeführt werden, wobei gemäß a) das Caprolactam im festen Zustand und gemäß b) das thermoplastische Polyurethan im festen Zustand bereitgestellt werden und gemäß c) das Caprolactam und das thermoplastische Polyurethan durch Kneten gemischt werden und die erhaltene Mischung auf T₁ erwärmt wird. Bei dieser alternativen diskontinuierlichen Verfahrensführung ist es bevorzugt, dass die Mischung gemäß c) für einen Zeitraum im Bereich von 0,1 bis 20 min, weiter bevorzugt von 0,3 min bis 16 min, weiter bevorzugt von 0,5 bis 12 min bei T₁ gehalten wird.

Überraschenderweise ermöglichen die erfindungsgemäßen diskontinuierlichen Verfahrensführungen eine im Vergleich zu herkömmlichen Copolymerisationsverfahren zur Herstellung von auf Polycaprolactam und einem thermoplastischen Polyurethan basierenden Copolymeren eine höhere Polymerisationsgeschwindigkeit, welche vorteilhafterweise selbst bei einer niedrigen Polymerisationstemperatur T₂ von z.B. ca. 140 °C realisiert werden kann. Somit kann der Polymerisationsschritt d) innerhalb eines vorteilhaft kurzen Zeitraums durchgeführt werden, was zu einem besonders energie- und zeiteffizienten Verfahren beiträgt.

### Kontinuierliche Verfahrensführung

Das erfindungsgemäße Verfahren kann alternativ als kontinuierliches Verfahren durchgeführt werden, in welchem das Herstellen gemäß c) und das Zugeben und Polymerisieren gemäß d) bevorzugt als kontinuierliches Verfahren umfassend ein Extrusionsverfahren durchgeführt werden, wobei das Herstellen gemäß c) außerhalb des für das Extrusionsverfahren verwendeten Extruders durchgeführt wird, die gemäß c) hergestellte Mischung dem für das Extrusionsverfahren verwendeten Extruder zugeführt wird und das Polymerisieren gemäß d) innerhalb des Extruders durchgeführt wird. Hierbei ist es bevorzugt, dass gemäß a) das Caprolactam im festen Zustand und gemäß b) das thermoplastische Polyurethan im festen Zustand bereitgestellt werden und gemäß c) das Caprolactam und das thermoplastische Polyurethan durch Kneten im Extruder gemischt werden und die erhaltene Mischung auf T₁ erwärmt wird. Bevorzugt wird die Mischung gemäß c) für einen Zeitraum im Bereich von 5 min bis 3 h, weiter bevorzugt von 10 min bis 2 h, weiter bevorzugt von 20 min bis 1 h bei T₁ gehalten.

Der Polymerisationskatalysator wird bevorzugt in mindestens einer ersten Zone des Extruders zugeführt und die Mischung gemäß c) wird in mindestens einer zweiten Zone des Extruders zugeführt, wobei die mindestens eine zweite Zone der mindestens einen ersten Zone nachgeschaltet ist.

Optional kann gemäß d) zusätzlich ein Polymerisationsaktivator zugegeben werden. Der Polymerisationsaktivator kann grundsätzlich an jeder geeigneten Stelle inner- oder außerhalb des Extruders zugegeben werden. Beispielsweise kann der Polymerisationsaktivator zu einer außerhalb des Extruders hergestellten Mischung gemäß c) oder zu einer innerhalb des Extruders hergestellten Mischung gemäß c) vor oder nach Zugeben des Polymerisationskatalysators gemäß d) zugegeben werden. Bevorzugt wird der Polymerisationsaktivator zu der außerhalb des Extruders hergestellten Mischung gemäß c) zugegeben.

Alternativ kann das vorliegende Verfahren als kontinuierliches Verfahren durchgeführt werden, in welchem das Herstellen gemäß c) und das Zugeben und Polymerisieren gemäß d) als kontinuierliches Verfahren umfassend ein Extrusionsverfahren durchgeführt werden, wobei das Herstellen gemäß c) und das Polymerisieren gemäß d) innerhalb des für das Extrusionsverfahren verwendeten Extruders durchgeführt werden.

Bei dieser alternativen kontinuierlichen Verfahrensführung ist es bevorzugt, dass gemäß a) das Caprolactam im flüssigen Zustand und gemäß b) das thermoplastische Polyurethan im festen Zustand bereitgestellt werden und das Caprolactam im flüssigen Zustand und das thermoplastische Polyurethan im festen Zustand dem Extruder zugeführt werden.

Bei dieser alternativen kontinuierlichen Verfahrensführung wird das thermoplastische Polyurethan bevorzugt in mindestens einer ersten Zone des Extruders bei einer Temperatur größer oder gleich T₀ in den flüssigen Zustand gebracht. Des Weiteren ist es bevorzugt, dass in mindestens einer zweiten Zone des Extruders, welche der mindestens einen ersten Zone des Extruders nachgeschaltet ist, das Caprolactam unter Erhalt der Mischung gemäß c) zu geführt wird. Zudem wird vorzugsweise in mindestens einer dritten Zone des Extruders, welche der mindestens einen zweiten Zone des Extruders nachgeschaltet ist, der Polymerisationskatalysator zugeführt und gemäß d) polymerisiert.

Optional kann bei dieser alternativen kontinuierlichen Verfahrensführung gemäß d) zusätzlich ein Polymerisationsaktivator zugegeben werden, wobei der Polymerisationsaktivator als Mischung mit Caprolactam in einer zweiten Zone des Extruders zugeführt wird.

Bevorzugt wird das Polymerisieren gemäß d) für einen Zeitraum im Bereich von 0,5 bis 10 min, weiter bevorzugt 1 bis 6 min, weiter bevorzugt 1,5 bis 4 min durchgeführt.

Die beiden oben beschriebenen kontinuierlichen Verfahren umfassen bevorzugt zusätzlich einen Verfahrensschritt e), in welchem das gemäß d) erhaltene Copolymer granuliert wird. Des Weiteren umfassen die beiden oben beschriebenen kontinuierlichen Verfahren bevorzugt zusätzlich einen Verfahrensschritt f), in welchem das gemäß d) erhaltenen Copolymer getempert wird, weiter bevorzugt wird das gemäß d) erhaltene und gemäß e) granulierte Copolymer getempert. Das Tempern gemäß f) erfolgt bevorzugt bei einer Temperatur im Bereich von 60 bis 170 °C, weiter bevorzugt von 90 bis 150 °C, weiter bevorzugt von 100 bis 130 °C.

### Thermoplastisches Copolymer

Das Diisocyanat gemäß (i) ist bevorzugt ein aliphatisches Diisocyanat ausgewählt aus der Gruppe bestehend aus C1- bis C20-Alkylendiisocyanaten und einem Gemisch aus zwei oder mehr davon, weiter bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MDI), 1-Isocyanato-3-isocyanatomethyl-3,5,5-trimethylcyclohexan (IPDI) und einem Gemisch aus zwei oder mehr davon.

Beispielsweise sind die C1- bis C20-Alkylendiisocyanate ausgewählt aus der Gruppe bestehend aus C1-, C2-, C3-, C4-, C5-, C6-, C7-, C8-, C9-, C10-, C11-, C12-, C13-, C14-, C15-, C16-, C17-, C18-, C19-, C20-Alkylendiisocyanat und einem Gemisch aus zwei oder mehr davon, und die C6- bis C13-Alkylendiisocyanate sind ausgewählt aus der Gruppe bestehend aus C6-, C7-, C8-, C9-, C10-, C11-, C12-, C13-Alkylendiisocanat und einem Gemisch aus zwei oder mehr davon.

Das Diisocyanat gemäß (i) kann jedoch auch ein aromatisches Diisocyanat sein, welches bevorzugt ausgewählt ist aus der Gruppe bestehend aus C6- bis C20-Arylendiisocyanaten, C6-bis C20-Arylenalkylendiisocyanaten und einem Gemisch aus zwei oder mehr davon, weiter bevorzugt aus der Gruppe bestehend aus C6- bis C18-Arylendiisocyanaten, C6- bis C18-Arylenalkylendiisocyanaten und einem Gemisch aus zwei oder mehr davon, weiter bevorzugt aus der Gruppe bestehend aus C6- bis C14-Arylendiisocyanaten, C6- bis C14-Arylenalkylendiisocyanaten und einem Gemisch aus zwei oder mehr davon, weiter bevorzugt aus der Gruppe bestehend aus 4,4'-Methylendiphenyldiisocyanat (MDI), Toluol-2,4-diisocyanat (TDI) und einem Gemisch davon.

Beispielsweise sind die C6- bis C20-Arylen- und Arylenalkylendiisocyanate ausgewählt aus der Gruppe bestehend aus C6-, C7-, C8-, C9-, C10-, C11-, C12-, C13-, C14-, C15-, C16-, C17-, C18-, C19-, C20-Arylen- und Arylenalkylendiisocyanaten und einem Gemisch aus zwei oder mehr davon, und die C6- bis C14-Arylen- und Arylenalkylendiisocyanaten sind ausgewählt aus der Gruppe bestehend aus C6-, C7-, C8-, C9-, C10-, C11-, C12-, C13-, C14- Arylen- und Arylenalkylendiisocyanaten und einem Gemisch aus zwei oder mehr davon.

Bevorzugt ist das Diisocyanat gemäß (i) ein aliphatisches Diisocyanat.

Das aliphatische Diol gemäß (ii) ist bevorzugt ausgewählt aus der Gruppe bestehend aus C1-bis C20-Alkylendiolen und einem Gemisch aus zwei oder mehr davon, weiter bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt 1,4-aus der Gruppe bestehend aus Butandiol, 1,6-Hexandiol und einem Gemisch davon.

Beispielsweise sind die C1- bis C20-Alkylendiole ausgewählt aus der Gruppe bestehend aus C1-, C2-, C3-, C4-, C5-, C6-, C7-, C8-, C9-, C10-, C11-, C12-, C13-, C14-, C15-, C16-, C17-, C18-, C19-, C20-Alkylendiol und einem Gemisch aus zwei oder mehr davon, und die C3- bis C8-Alkylendiole sind ausgewählt aus der Gruppe bestehend aus C3-, C4-, C5-, C6-, C7-, C8-Alkylendiol und einem Gemisch aus zwei oder mehr davon.

Das aromatische Diol gemäß (ii) ist bevorzugt ausgewählt aus der Gruppe bestehend aus C6-bis C20-Arylendiolen, C6- bis C20-Arylenalkylendiolen und einem Gemisch aus zwei oder mehr davon, bevorzugt aus der Gruppe bestehend aus C6- bis C18-Arylendiolen, C6- bis C18-Arylenalkylendiolen und einem Gemisch aus zwei oder mehr davon, weiter bevorzugt aus der Gruppe bestehend aus C6- bis C14-Arylendiolen, C6- bis C14-Arylenalkylendiolen und einem Gemisch aus zwei oder mehr davon.

Beispielsweise sind die C6- bis C20-Arylen- und Arylenalkylendiole ausgewählt aus der Gruppe bestehend aus C6-, C7-, C8-, C9-, C10-, C11-, C12-, C13-, C14-, C15-, C16-, C17-, C18-, C19-, C20-Arylen- und Arylenalkylendiolen und einem Gemisch aus zwei oder mehr davon, und die C6- bis C14-Arylen- und Arylenalkylendiole sind ausgewählt aus der Gruppe bestehend aus C6-, C7-, C8-, C9-, C10-, C11-, C12-, C13-, C14- Arylen- und Arylenalkylendiolen und einem Gemisch aus zwei oder mehr davon.

Der aliphatische Polyether gemäß (iii) ist bevorzugt ausgewählt aus der Gruppe bestehend aus Poly(C1- bis C20-alkylen)ethern und einem Gemisch aus zwei oder mehr davon, weiter bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der aliphatische Polyalkylenether gemäß (iii) weiter bevorzugt Polytetrahydrofuran ist.

Beispielsweise sind die Poly(C1- bis C20-alkylen)ether ausgewählt aus der Gruppe bestehend aus Poly(C1-alkylen)ether, Poly(C2-alkylen)ether, Poly(C3-alkylen)ether, Poly(C4-alkylen)ether, Poly(C5-alkylen)ether, Poly(C6-alkylen)ether, Poly(C7-alkylen)ether, Poly(C8-alkylen)ether, Poly(C9-alkylen)ether, Poly(C10-alkylen)ether, Poly(C11-alkylen)ether, Poly(C12-alkylen)ether, Poly(C13-alkylen)ether, Poly(C14-alkylen)ether, Poly(C15-alkylen)ether, Poly(C16-alkylen)ether, Poly(C17-alkylen)ether, Poly(C18-alkylen)ether, Poly(C19-alkylen)ether, Poly(C20-alkylen)ether und einem Gemisch aus zwei oder mehr davon, und die Poly(C2- bis C6-alkylen)ether sind ausgewählt aus der Gruppe bestehend aus Poly(C2-alkylen)ether, Poly(C3-alkylen)ether, Poly(C4-alkylen)ether, Poly(C5-alkylen)ether, Poly(C6-alkylen)ether und einem Gemisch aus zwei oder mehr davon.

Der aromatische Polyether gemäß (iii) ist bevorzugt ausgewählt aus der Gruppe bestehend aus Poly(C6- bis C20-arylen)ethern, Poly(C6- bis C20-arylenalkylen)ethern und einem Gemisch aus zwei oder mehr davon, weiter bevorzugt aus der Gruppe bestehend aus Poly(C6- bis C18-arylen)ethern, Poly(C6- bis C18-arylenalkylen)ethern und einem Gemisch aus zwei oder mehr davon, weiter bevorzugt aus der Gruppe bestehend aus Poly(C6- bis C14-arylen)ethern, Poly(C6- bis C14-arylenalkylen)ethern und einem Gemisch aus zwei oder mehr davon.

Beispielsweise sind die Poly(C6- bis C20-arylen)ether ausgewählt aus der Gruppe bestehend aus Poly(C6-arylen)ether, Poly(C7-arylen)ether, Poly(C8-arylen)ether, Poly(C9-arylen)ether, Poly(C10-arylen)ether, Poly(C11-arylen)ether, Poly(C12-arylen)ether, Poly(C13-arylen)ether, Poly(C14-arylen)ether, Poly(C15-arylen)ether, Poly(C16-arylen)ether, Poly(C17-arylen)ether, Poly(C18-arylen)ether, Poly(C19-arylen)ether, Poly(C20-arylen)ether und einem Gemisch aus zwei oder mehr davon, und die Poly(C6- bis C14-arylen)ether sind ausgewählt aus der Gruppe bestehend aus Poly(C6-arylen)ether, Poly(C7-arylen)ether, Poly(C8-arylen)ether, Poly(C9-arylen)ether, Poly(C10-arylen)ether, Poly(C11-arylen)ether, Poly(C12-arylen)ether, Poly(C13-arylen)ether, Poly(C14-arylen)ether und einem Gemisch aus zwei oder mehr davon.

Beispielsweise sind die Poly(C6- bis C20-arylenalkylen)ether ausgewählt aus der Gruppe bestehend aus Poly(C6-arylenalkylen)ether, Poly(C7-arylenalkylen)ether, Poly(C8-arylenalkylen)ether, Poly(C9-arylenalkylen)ether, Poly(C10-arylenalkylen)ether, Poly(C11-arylenalkylen)ether, Poly(C12-arylenalkylen)ether, Poly(C13-arylenalkylen)ether, Poly(C14-arylenalkylen)ether, Poly(C15-arylenalkylen)ether, Poly(C16-arylenalkylen)ether, Poly(C17-arylenalkylen)ether, Poly(C18-arylenalkylen)ether, Poly(C19-arylenalkylen)ether, Poly(C20-arylenalkylen)ether und einem Gemisch aus zwei oder mehr davon, und die Poly(C6- bis C14-arylenalkylen)ether sind ausgewählt aus der Gruppe bestehend aus Poly(C6-arylenalkylen)ether, Poly(C7-arylenalkylen)ether, Poly(C8-arylenalkylen)ether, Poly(C9-arylenalkylen)ether, Poly(C10-arylenalkylen)ether, Poly(C11-arylenalkylen)ether, Poly(C12-arylenalkylen)ether, Poly(C13-arylenalkylen)ether, Poly(C14-arylenalkylen)ether und einem Gemisch aus zwei oder mehr davon.

Die für die jeweiligen Alkylenreste, Arylenreste und Arylenalkylenreste des Diisocyanats gemäß (i), des Diols gemäß (ii) und des Polyethers gemäß (iii) angegebene Anzahl der Kohlenstoffatome bezieht sich auf die Gesamtzahl der Kohlenstoffatome des Alkylen-, Arylen- und Arylenalkylenrests. So ist beispielsweise unter "C20-Alkylen" ein Alkylenrest zu verstehen, der 20 Kohlenstoffatome aufweist.

Die Alkylenreste, Arylenreste und Arylenalkylenreste des Diisocyanats gemäß (i), des Diols gemäß (ii) und des Polyethers gemäß (iii) unterliegen keiner besonderen Beschränkung und können jeweils grundsätzlich substituiert oder unsubstituiert sein. Beispielsweise sind die substituierten Alkylenreste, Arylenreste und Alkylenarylenreste bevorzugt mit mindestens einem Substituenten, weiter bevorzugt mit ein bis drei Substituenten, weiter bevorzugt mit einem Substituenten substituiert. Die Substituenten können verschieden oder identisch sein. Die Substituenten müssen sich unter den Bedingungen gemäß Schritt c) oder d) inert verhalten, weshalb zum Beispiel Alkylreste bevorzugt sind. Weiter bevorzugt sind C1-C6 Alkylreste, weiter bevorzugt C1-C3 Alkylreste.

Bevorzugt sind die Alkylenreste, Arylenreste und Arylenalkylenreste des Diisocyanats gemäß (i), des Diols gemäß (ii) und des Polyethers gemäß (iii) unsubstituiert.

Bevorzugt weist der Polyalkylenether gemäß (iii) ein Zahlenmittel des Molekulargewichts (Mₙ) im Bereich von 300 bis 8.000 g, weiter bevorzugt von 600 bis 4.500 g, weiter bevorzugt von 800 bis 2.500 g auf.

Bevorzugt basiert das thermoplastische Polyurethan auf einem Diisocyanat gemäß (i) ausgewählt aus der Gruppe bestehend aus C1- bis C20-Alkylendiisocyanaten, C6- bis C20-Arylendiisocyanaten, C6- bis C20-Arylenalkylendiisocyanaten und einem Gemisch aus zwei oder mehr davon, einem Diol gemäß (ii) ausgewählt aus der Gruppe bestehend aus C1- bis C20-Alkylendiolen, C6- bis C20-Arylendiolen, C6- bis C20-Arylenalkylendiolen und einem Gemisch aus zwei oder mehr davon und einem Polyether gemäß (iii) mit einem Zahlenmittel des Molekulargewichts (Mₙ) im Bereich von 300 bis 8.000 g ausgewählt aus der Gruppe bestehend aus Poly(C1- bis C20-alkylen)ethern, Poly(C6- bis C20-arylen)ethern, Poly(C6- bis C20-arylenalkylen)ethern und einem Gemisch aus zwei oder mehr davon. Weiter bevorzugt basiert das thermoplastische Polyurethan gemäß b) auf einem Diisocyanat gemäß (i) ausgewählt aus der Gruppe bestehend aus C6- bis C13-Alkylendiisocyanaten, C6- bis C14-Arylendiisocyanaten, C6- bis C14-Arylenalkylendiisocyanaten und einem Gemisch aus zwei oder mehr davon, einem Diol gemäß (ii) ausgewählt aus der Gruppe bestehend aus C4- bis C6-Alkylendiolen, C6- bis C14-Arylendiolen, C6- bis C14-Arylenalkylendiolen und einem Gemisch aus zwei oder mehr davon und einem Polyether gemäß (iii) mit einem Zahlenmittel des Molekulargewichts (Mₙ) im Bereich von 600 bis 4.500 g ausgewählt aus der Gruppe bestehend aus Poly(C2- bis C6-alkylen)ethern, Poly(C6- bis C14-arylen)ethern, Poly(C6- bis C14-arylenalkylen)ethern und einem Gemisch aus zwei oder mehr davon. Weiter bevorzugt basiert das thermoplastische Polyurethan gemäß b) auf einem Diisocyanat gemäß (i) ausgewählt aus der Gruppe bestehend aus 1,6-Hexamethylendiisocyanat (HDI), 4,4'-Diisocyanatodicyclohexylmethan (H12MD1), 1-Isocyanato-3-isocyanatomethyl-3,5,5-trimethylcyclohexan (IPDI), 4,4'-Methylendiphenyldiisocyanat (MDI), Toluol-2,4-diisocyanat (TDI) und einem Gemisch aus zwei oder mehr davon, einem Diol gemäß (ii) ausgewählt aus der Gruppe bestehend aus 1,4-Butandiol, 1,6-Hexandiol und einem Gemisch davon und einem Polyether gemäß (iii) ausgewählt aus Polytetrahydrofuran mit einem Zahlenmittel des Molekulargewichts (Mₙ) im Bereich von 800 bis 2.500 g. Weiter bevorzugt basiert das thermoplastische Polyurethan gemäß b) auf (i) 1,6-Hexamethylendiisocyanat (HDI), 4,4'-Diisocyanatodicyclohexylmethan (H12MDI) oder 4,4'-Methylendiphenyldiisocyanat (MDI), (ii) 1,4-Butandiol oder 1,6-Hexandiol, und (iii) Polytetrahydrofuran mit einem Zahlenmittel des Molekulargewichts (Mₙ) im Bereich von 800 bis 2.500 g.

Bevorzugt ist mindestens eine, weiter bevorzugt sind sämtliche der Komponenten Diisocyanat (i), Diol (ii) und Polyether (iii) aliphatisch. Weiter bevorzugt weisen die aliphatischen Komponenten (i), (ii) und (iii) einen linearen und/oder cyclischen Alkylenrest auf, weiter bevorzugt weist das Diisocyanat (i) einen linearen und/oder cyclischen Alkylenrest, das Diol (ii) einen linearen Alkylenrest und der Polyalkylenether (iii) einen linearen Alkylenrest auf.

Unter dem hier verwendeten Begriff "linearer und cyclischer Alkylenrest" ist ein Alkylenrest zu verstehen, welcher aus mindestens einem linearen und mindestens einem cyclischen Alkylenrest zusammengesetzt ist, wie zum Beispiel der Dicyclohexylmethanrest von 4,4'-Diisocyanatodicyclohexylmethan (H12MDI).

Bevorzugt weist das thermoplastische Polyurethan ein Zahlenmittel des Molekulargewichts (Mₙ) im Bereich von 10.000 bis 300.000 g, weiter bevorzugt von 15.000 bis 200.000 g, weiter bevorzugt von 19.000 bis 160.000 g auf.

Das erfindungsgemäße thermoplastische Copolymer weist bevorzugt einem Gehalt von nicht copolymerisiertem Lactam von höchstens 10 Gew.-%, weiter bevorzugt von höchstens 7 Gew.-%, weiter bevorzugt von höchstens 5 Gew.-%, bezogen auf die Summe der Gewichte des thermoplastischen Copolymers und des nicht copolymerisierten Lactams, auf.

Bevorzugt enthält das erfindungsgemäße thermoplastische Copolymer das thermoplastische Polyurethan in einer Menge von 0,25 bis 20 Gew.-%, bevorzugt 0,5 bis 16,67 Gew.-%, weiter bevorzugt 1 bis 12,5 Gew.-%, bezogen auf die Summe der Gewichte des im Copolymer enthaltenen Caprolactams und thermoplastischen Polyurethans.

Bevorzugt ist ein thermoplastisches Copolymer, welches basiert auf Polycaprolactam und einem auf
(i') einem C3- bis C18-Alkylendiisocyanat oder einem C6- bis C18-Arylenalkylendiisocyanat;
(ii') einem C3- bis C8-Alkylendiol; und
(iii') einem Poly(C2- bis C6-alkylen)ether mit einem Zahlenmittel des Molekulargewichts (Mₙ) im Bereich von 600 bis 4.500 g
   basierenden thermoplastischen Polyurethan,
wobei das Copolymer das thermoplastische Polyurethan in einer Menge von 0,25 bis 20 Gew.-%, bezogen auf die Summe der Gewichte des im Copolymer enthaltenen Caprolactams und thermoplastischen Polyurethans, enthält.

Bevorzugt weist das erfindungsgemäße thermoplastische Copolymer ein Biegemodul im Bereich von 5:000 bis 200:000 MPa, bevorzugt von 10:000 bis 150:000 MPa, weiter bevorzugt von 15:000 bis 100:000 MPa, bestimmt über ISO 14125, auf.

Bevorzugt weist das erfindungsgemäße thermoplastische Copolymer eine Biegefestigkeit im Bereich von 100 bis 1:500 MPa, bevorzugt von 200 bis 1:400 MPa, weiter bevorzugt von 400 bis 1:200 MPa, bestimmt über ISO 14125, auf.

Bevorzugt ist das erfindungsgemäße thermoplastische Copolymer hergestellt oder herstellbar durch das erfindungsgemäße Verfahren zur Herstellung eines thermoplastischen, auf Polycaprolactam und einem thermoplastischen Polyurethan basierenden Copolymers, weiter bevorzugt durch das erfindungsgemäße diskontinuierliche Verfahren, in welchem bevorzugt gemäß d) in einer Form polymerisiert wird, weiter bevorzugt in einer Reaction Injection Molding (RIM) Form.

### Formkörper

Der Formkörper unterliegt grundsätzlich keiner besonderen Beschränkung. Beispielsweise kann der Formkörper ein massiver Körper, das heißt ein Körper welcher keine Hohlräume aufweist, oder ein Hohlkörper, welcher Hohlräume aufweist, wie zum Beispiel ein Schlauch, sein. Bevorzugt ist der Formkörper ein massiver Körper.

Der Formkörper enthält bevorzugt mindestens einen Füllstoff. Der Füllstoff unterliegt grundsätzlich keiner besonderen Beschränkung. Der Füllstoff kann ein anorganisches oder organisches Material umfassen, wie zum Beispiel ein anorganischen Material ausgewählt aus der Gruppe aus Gläsern, Silikaten, Ruß, Graphit, Metalloxiden, Metallcarbonaten, Metallsulfaten und einem Gemisch aus zwei oder mehr davon, oder ein organisches Material wie zum Beispiel ein Aramid-Polymer. Der Füllstoff kann beispielsweise als Farbpigment, Antistatikum, Flammschutz oder zur mechanischen Verstärkung des Formköpers zugegeben werden. Die Form des Füllstoffs unterliegt keiner besonderen Beschränkung. Der Füllstoff kann in partikulärer Form wie zum Beispiel Pulver-, Granulat- oder Kugelform vorliegen, oder in Form einer Faser oder eines Fasergewebes. Bevorzugt umfasst der Füllstoff Glasfaser, weiter bevorzugt Glasfasergewebe. Bevorzugt wird der Füllstoff in dem oben beschriebenen diskontinuierlichen Verfahren bei dem Polymerisieren gemäß d) zugegeben, wobei in einer Form polymerisiert wird, bevorzugt in einer Reaction Injection Molding (RIM) Form.

Bevorzugt ist der Formköper hergestellt aus einem thermoplastischen Copolymer, welches basiert auf Polycaprolactam und einem auf
(i') einem C3- bis C18-Alkylendiisocyanat oder einem C6- bis C18-Arylenalkylendiisocyanat;
(ii') einem C3- bis C8-Alkylendiol; und
(iii') einem Poly(C2- bis C6-alkylen)ether mit einem Zahlenmittel des Molekulargewichts (Mₙ) im Bereich von 600 bis 4.500 g
   basierenden thermoplastischen Polyurethan,
wobei das Copolymer das thermoplastische Polyurethan in einer Menge von 0,25 bis 20 Gew.-%, bezogen auf die Summe der Gewichte des im Copolymer enthaltenen Caprolactams und thermoplastischen Polyurethans, enthält.

### Verwendung

Des Weiteren betrifft die vorliegende Erfindung eine Verwendung des erfindungsgemäßen thermoplastischen Copolymers zur Herstellung eines Formkörpers. Bevorzugt ist der Formkörper ein massiver Körper. Der Formkörper enthält bevorzugt mindestens einen Füllstoff, weiter bevorzugt Glasfaser, weiter bevorzugt Glasfasergewebe.

Die vorliegende Erfindung wird durch die folgenden Ausführungsformen und deren Kombinationen, die sich aus den entsprechenden Verweisen und Rückbezügen ergeben, näher illustriert:
1. Verfahren zur Herstellung eines thermoplastischen, auf Polycaprolactam und einem thermoplastischen Polyurethan basierenden Copolymers, umfassend:
   a) Bereitstellen von Caprolactam;
   b) Bereitstellen des thermoplastischen, auf
      (i) einem Diisocyanat ausgewählt aus der Gruppe bestehend aus aliphatischen Diisocyanaten, aromatischen Diisocyanaten und einem Gemisch aus zwei oder mehr davon;
      (ii) einem Diol ausgewählt aus der Gruppe bestehend aus aliphatischen Diolen, aromatischen Diolen und einem Gemisch aus zwei oder mehr davon; und
      (iii) einem Polyether ausgewählt aus der Gruppe bestehend aus aliphatischen Polyethern, aromatischen Polyethern und einem Gemisch aus zwei oder mehr davon
         basierenden Polyurethans mit einer Schmelztemperatur T₀;
   c) Herstellen einer flüssigen Mischung einer Temperatur T₁ enthaltend das Caprolactam und das thermoplastische Polyurethan;
   d) Zugeben eines Polymerisationskatalysators zur flüssigen Mischung gemäß c) unter Erhalt einer Mischung enthaltend das Caprolactam und das thermoplastische Polyurethan in einem Massenverhältnis von Caprolactam zu thermoplastischem Polyurethan von mehr als 3:1, und Polymerisieren bei einer Temperatur T₂ von höchstens 175 °C unter Erhalt des thermoplastischen Copolymers.
2. Verfahren nach Ausführungsform 1, wobei gemäß a) das Caprolactam in festem oder geschmolzenem Zustand, bevorzugt in geschmolzenem Zustand bereitgestellt wird.
3. Verfahren nach einer der Ausführungsformen 1 oder 2, wobei die aliphatischen Diisocyanate gemäß (i) ausgewählt sind aus der Gruppe bestehend aus C1- bis C20-Alkylendiisocyanaten und einem Gemisch aus zwei oder mehr davon, bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MDI) oder 1-Isocyanato-3-isocyanatomethyl-3,5,5-trimethylcyclohexan (IPDI) und einem Gemisch aus zwei oder mehr davon.
4. Verfahren nach einer der Ausführungsformen 1 bis 3, wobei die aromatischen Diisocyanate gemäß (i) ausgewählt sind aus der Gruppe bestehend aus C6- bis C20-Arylendiisocyanaten, C6- bis C20-Arylenalkylendiisocyanaten und einem Gemisch aus zwei oder mehr davon, weiter bevorzugt aus der Gruppe bestehend aus C6- bis C18-Arylendiisocyanaten, C6- bis C18-Arylenalkylendiisocyanaten und einem Gemisch aus zwei oder mehr davon, weiter bevorzugt aus der Gruppe bestehend aus C6- bis C14-Arylendiisocyanaten, C6- bis C14-Arylenalkylendiisocyanaten und einem Gemisch aus zwei oder mehr davon, weiter bevorzugt aus der Gruppe bestehend aus 4,4'-Methylendiphenyldiisocyanat (MDI), Toluol-2,4-diisocyanat (TDI) und einem Gemisch davon.
5. Verfahren nach einer der Ausführungsformen 1 bis 4, wobei die aliphatischen Diole gemäß (ii) ausgewählt sind aus der Gruppe bestehend aus C1- bis C20-Alkylendiolen und einem Gemisch aus zwei oder mehr davon, bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon.
6. Verfahren nach einer der Ausführungsformen 1 bis 5, wobei die aromatischen Diole gemäß (ii) ausgewählt sind aus der Gruppe bestehend aus C6- bis C20-Arylendiolen, C6- bis C20-Arylenalkylendiolen und einem Gemisch aus zwei oder mehr davon, bevorzugt aus der Gruppe bestehend aus C6- bis C18-Arylendiolen, C6- bis C18-Arylenalkylendiolen und einem Gemisch aus zwei oder mehr davon, weiter bevorzugt aus der Gruppe bestehend aus C6- bis C14-Arylendiolen, C6- bis C14-Arylenalkylendiolen und einem Gemisch aus zwei oder mehr davon.
7. Verfahren nach einer der Ausführungsformen 1 bis 6, wobei die aliphatischen Polyether gemäß (iii) ausgewählt sind aus der Gruppe bestehend aus Poly(C1- bis C20-alkylen)ethern und einem Gemisch aus zwei oder mehr davon, bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der Polyalkylenether gemäß (iii) weiter bevorzugt Polytetrahydrofuran ist.
8. Verfahren nach einer der Ausführungsformen 1 bis 7, wobei die aromatischen Polyether gemäß (iii) ausgewählt sind aus der Gruppe bestehend aus Poly(C6- bis C20-arylen)ethern, Poly(C6- bis C20-arylenalkylen)ethern und einem Gemisch aus zwei oder mehr davon, weiter bevorzugt aus der Gruppe bestehend aus Poly(C6- bis C18-arylen)ethern, Poly(C6- bis C18-arylenalkylen)ethern und einem Gemisch aus zwei oder mehr davon, weiter bevorzugt aus der Gruppe bestehend aus Poly(C6- bis C14-arylen)ethern, Poly(C6- bis C14-arylenalkylen)ethern und einem Gemisch aus zwei oder mehr davon.
9. Verfahren nach einer der Ausführungsformen 1 bis 8, wobei mindestens eine, bevorzugt mindestens zwei, weiter bevorzugt sämtliche der Komponenten Diisocyanat (i), Diol (ii) und Polyether (iii) aliphatisch sind.
10. Verfahren nach Ausführungsform 9, wobei die aliphatischen Komponenten (i), (ii) und (iii) einen linearen und/oder cyclischen Alkylenrest aufweisen, wobei bevorzugt das Diisocyanat (i) einen linearen und/oder cyclischen Alkylenrest, das Diol (ii) einen linearen Alkylenrest und der Polyether (iii) einen linearen Alkylenrest aufweisen.
11. Verfahren nach einer der Ausführungsformen 1 bis 10, wobei der Polyether gemäß (iii) ein Zahlenmittel des Molekulargewichts (Mₙ) im Bereich von 300 bis 8.000 g, bevorzugt von 600 bis 4.500 g, weiter bevorzugt von 800 bis 2.500 g aufweist.
12. Verfahren nach einer der Ausführungsformen 1 bis 11, wobei das thermoplastische Polyurethan gemäß b) ein Zahlenmittel des Molekulargewichts (Mₙ) im Bereich von 10.000 bis 300.000 g, bevorzugt von 15.000 bis 200.000 g, weiter bevorzugt von 19.000 bis 160.000 g aufweist.
13. Verfahren nach einer der Ausführungsformen 1 bis 12, wobei T₀ im Bereich von 155 bis 280 °C, bevorzugt von 160 bis 250 °C, weiter bevorzugt von 170 bis 230 °C liegt.
14. Verfahren nach einer der Ausführungsformen 1 bis 13, wobei T₁ kleiner oder gleich T₀ ist, wobei T₁ bevorzugt im Bereich von 100 bis 175 °C, weiter bevorzugt von 100 bis 160 °C, weiter bevorzugt von 110 bis 150 °C liegt.
15. Verfahren nach einer der Ausführungsformen 1 bis 14, wobei T₂ im Bereich von 100 bis 175 °C, bevorzugt von 115 bis 170 °C, weiter bevorzugt von 130 bis 160 °C liegt.
16. Verfahren nach einer der Ausführungsformen 1 bis 15, wobei T₂ größer oder gleich T₁ ist, wobei die Temperaturdifferenz T₂ - T₁ bevorzugt im Bereich von 0 bis 40 °C, weiter bevorzugt von 0 bis 30 °C, weiter bevorzugt von 0 bis 20 °C liegt.
17. Verfahren nach einer der Ausführungsformen 1 bis 16, wobei der Polymerisationskatalysator gemäß d) ein Salz von Caprolactam, bevorzugt ein Alkali- oder Erdalkalimetallsalz von Caprolactam, weiter bevorzugt ein Alkalimetallsalz von Caprolactam, weiter bevorzugt das Natriumsalz oder das Kaliumsalz von Caprolactam, weiter bevorzugt das Natriumsalz von Caprolactam ist.
18. Verfahren nach einer der Ausführungsformen 1 bis 17, wobei gemäß d) der Polymerisationskatalysator in einer Menge im Bereich von 0,2 bis 4 Gew.-%, bevorzugt von 0,4 bis 3,4 Gew.-%, weiter bevorzugt von 0,6 bis 3 Gew.-%, bezogen auf die Summe der Gewichte des Caprolactams und des thermoplastischen Polyurethans, zugegeben wird.
19. Verfahren nach einer der Ausführungsformen 1 bis 18, wobei gemäß d) zusätzlich ein Polymerisationsaktivator zugegeben wird, und wobei bevorzugt der Polymerisationsaktivator bei Bereitstellen eines thermoplastischen Polyurethans gemäß b) basierend auf mindestens einer aromatischen Komponente (i), (ii) und/oder (iii) zugegeben wird.
20. Verfahren nach Ausführungsform 19, wobei der Polymerisationsaktivator ausgewählt ist aus der Gruppe bestehend aus mit einer Carbonylgruppe N-substituierten Lactamen, aliphatischen und aromatischen Diisocyanaten, Allophanaten, Polyisocyanaten, aliphatischen und aromatischen Disäurehalogeniden, und einem Gemisch aus zwei oder mehr davon, bevorzugt aus der Gruppe bestehend aus N,N'-C1- bis N,N'-C20-alkylendicarbamoylcaprolactamen, N,N'-Alkylendicarbamoylcapro-lactamen, N-Acetyl C3-C10 Lactamen, C2-C16 Alkylendiisocyanaten, C5-C12 Arylendiisocyanaten oder C5-C16 Arylenalkylendiisocyanaten, C1-C6 Alkylen-allophanaten, C12-C24 Alkylenpolyisocyanaten, C2-C16 Alkylendisäurehalogeniden, C5-C12 Arylendisäurehalogeniden oder C5-C16 Arylenalkylendisäurehalogeniden, und einem Gemisch aus zwei oder mehr davon, weiter bevorzugt aus der Gruppe bestehend aus N,N'-C3- bis N,N'-C8-Alkylendicarbamoylcaprolactamen, N-Acetyl C4-C8 Lactamen, C4-C13 Alkylendiisocyanaten, C6-C10 Arylendiisocyanaten oder C7-C10 Arylenalkylendiisocyanaten, C2-C4 Alkylenallophanaten, C16-C20 Alkylenpolyisocyanaten, C4-C13 Alkylendisäurehalogeniden, C6-C10 Arylendisäurehalogeniden oder C8-C12 Arylenalkylendisäurehalogeniden, und einem Gemisch aus zwei oder mehr davon.
21. Verfahren nach Ausführungsform 19 oder 20, wobei der Polymerisationsaktivator ausgewählt ist aus der Gruppe bestehend aus N,N'-Hexamethylen-1,6-dicarbamoylcaprolactam, Acetylcaprolactam, Butylendiisocyanat, Hexamethylendiisocyanat, Methylenbis(cyclohexylisocyanat); Toluyldiisocyanat, Ethylallophanat, Trimer von 1,6-Hexamethylendiisocyanat (HDI), Butylendisäurebromid, Hexamethylendisäurechlorid, 4,4'-Methylenbis(cyclohexylsäurechlorid, Toluylmethylendisäurechlorid, und einem Gemisch aus zwei oder mehr davon.
22. Verfahren nach einer der Ausführungsformen 19 bis 21, wobei der Polymerisationsaktivator ausgewählt ist aus der Gruppe bestehend aus den N,N'-Alkylendicarbamoylcaprolactamen und einem Gemisch aus zwei oder mehr davon, bevorzugt aus der Gruppe bestehend aus N,N'-C1- bis N,N'-C20-alkylendicarbamoylcaprolactamen und einem Gemisch aus zwei oder mehr davon, weiter bevorzugt aus der Gruppe bestehend aus N,N'-C2- bis N,N'-C12-alkylendicarbamoylcaprolactamen und einem Gemisch aus zwei oder mehr davon, weiter bevorzugt aus der Gruppe bestehend aus N,N'-C3- bis N,N'-C8-alkylendicarbamoylcaprolactamen und einem Gemisch aus zwei oder mehr davon, wobei der Polymerisationsaktivator weiter bevorzugt N,N'-Hexamethylen-1,6-dicarbamoylcaprolactam ist.
23. Verfahren nach einer der Ausführungsformen 19 bis 22, wobei der Polymerisationsaktivator in einer Menge im Bereich von 0,1 bis 15 Gew.-%, weiter bevorzugt von 0,25 bis 10 Gew.-%, weiter bevorzugt von 0,5 bis 6 Gew.-%, bezogen auf die Summe der Gewichte des Caprolactams und des thermoplastischen Polyurethans, zugegeben wird.
24. Verfahren nach einer der Ausführungsformen 1 bis 23, wobei das gemäß d) erhaltene thermoplastische Copolymer einen Gehalt von nicht copolymerisiertem Lactam von höchstens 10 Gew.-%, bevorzugt von höchstens 7 Gew.-%, weiter bevorzugt von höchstens 5 Gew.-%, bezogen auf die Summe der Gewichte des thermoplastischen Copolymers und des nicht copolymerisierten Lactams, aufweist.
25. Verfahren nach einer der Ausführungsformen 1 bis 24, wobei gemäß d) durch Zugeben des Polymerisationskatalysators zur flüssigen Mischung gemäß c) eine Mischung enthaltend das Caprolactam und das thermoplastische Polyurethan in einem Massenverhältnis von Caprolactam zu thermoplastischem Polyurethan im Bereich von 399:1 bis 4:1, bevorzugt 199:1 bis 5:1, weiter bevorzugt 99:1 bis 7:1 erhalten wird.
26. Verfahren nach einer der Ausführungsformen 1 bis 25, wobei das Herstellen gemäß c) und das Zugeben und Polymerisieren gemäß d) als diskontinuierliches oder kontinuierliches Verfahren, bevorzugt als diskontinuierliches Verfahren, weiter bevorzugt als diskontinuierliches Verfahren umfassend das Polymerisieren gemäß d) in eine Form, durchgeführt werden.
27. Verfahren nach Ausführungsform 26, wobei das Verfahren als diskontinuierliches Verfahren durchgeführt wird, wobei gemäß a) das Caprolactam im geschmolzenen Zustand und gemäß b) das thermoplastische Polyurethan im festen Zustand bereitgestellt werden, und die flüssige Mischung gemäß c) durch Zugabe des thermoplastischen Polyurethans zu Caprolactam im geschmolzenen Zustand bereitgestellt wird.
28. Verfahren nach Ausführungsform 27, wobei die Mischung gemäß c) für einen Zeitraum im Bereich von 1 min bis 1,5 h, bevorzugt von 10 min bis 80 min, weiter bevorzugt von 20 bis 70 min bei der Temperatur T₁ gehalten wird.
29. Verfahren nach Ausführungsform 26 oder 27, wobei gemäß d) der Polymerisationskatalysator in Form einer flüssigen Mischung enthaltend Polymerisationskatalysator und Caprolactam zugegeben wird.
30. Verfahren nach Ausführungsform 29, wobei die flüssige Mischung enthaltend Polymerisationskatalysator und Caprolactam durch Zugabe des Polymerisationskatalysators zu Caprolactam im geschmolzenen Zustand bereitgestellt wird.
31. Verfahren nach Ausführungsform 29 oder 30, wobei die flüssige Mischung enthaltend Polymerisationskatalysator und Caprolactam den Polymerisationskatalysator in einer Menge im Bereich von 0,4 bis 8 Gew.-%, bevorzugt von 0,8 bis 6,8 Gew.-%, weiter bevorzugt von 1,2 bis 6 Gew.-%, bezogen auf das Gewicht des Caprolactams, enthält.
32. Verfahren nach einer der Ausführungsformen 29 bis 31, wobei die flüssige Mischung enthaltend Polymerisationskatalysator und Caprolactam für einen Zeitraum im Bereich von 1 min bis 1,5 h, bevorzugt von 10 min bis 80 min, weiter bevorzugt von 20 bis 70 min bei einer Temperatur T₃ gehalten wird.
33. Verfahren nach Ausführungsform 32, wobei T₃ im Bereich von 100 bis 175 °C, weiter bevorzugt von 105 bis 155 °C, weiter bevorzugt von 110 bis 130 °C liegt.
34. Verfahren nach einer der Ausführungsformen 27 bis 33, wobei gemäß d) zusätzlich ein Polymerisationsaktivator zugegeben wird, und wobei bevorzugt der Polymerisationsaktivator der Mischung gemäß c) zugegeben wird.
35. Verfahren nach Ausführungsform 34, wobei der Polymerisationsaktivator der Mischung gemäß c) in einer Menge im Bereich von 1 bis 30 Gew.-%, bevorzugt von 2 bis 24 Gew.-%, weiter bevorzugt von 4 bis 18 Gew.-%, bezogen auf die Summe der Gewichte des Caprolactams und des thermoplastischen Polyurethans, zugegeben wird.
36. Verfahren nach einer der Ausführungsformen 27 bis 35, wobei gemäß d) die flüssige Mischung enthaltend Polymerisationskatalysator und Caprolactam zur flüssigen Mischung gemäß c) in einem Massenverhältnis von Mischung enthaltend Polymerisationskatalysator und Caprolactam zu Mischung gemäß c) von 1:4 bis 3:1, bevorzugt 1:3 bis 2:1, weiter bevorzugt 1:1,5 bis 1,5:1 gemischt werden.
37. Verfahren nach einer der Ausführungsformen 27 bis 36, wobei die flüssige Mischung enthaltend Polymerisationskatalysator und Caprolactam und die flüssige Mischung gemäß c) bei einer Temperatur T₄ gemischt werden.
38. Verfahren nach einer der Ausführungsformen 27 bis 37, wobei T₄ im Bereich von 100 bis 175 °C, bevorzugt von 105 bis 155 °C, weiter bevorzugt von 110 bis 130 °C liegt.
39. Verfahren nach einer der Ausführungsformen 27 bis 38, wobei das Polymerisieren gemäß d) für einen Zeitraum im Bereich von 0,1 bis 45 min, weiter bevorzugt von 3 bis 25 min, weiter bevorzugt von 5 bis 15 min durchgeführt wird.
40. Verfahren nach einer der Ausführungsformen 27 bis 39, wobei gemäß d) in einer Form polymerisiert wird, bevorzugt in einer Reaction Injection Molding (RIM) Form.
41. Verfahren nach Ausführungsform 26, wobei das Verfahren als diskontinuierliches Verfahren durchgeführt wird, wobei gemäß a) das Caprolactam im festen Zustand und gemäß b) das thermoplastische Polyurethan im festen Zustand bereitgestellt werden und gemäß c) das Caprolactam und das thermoplastische Polyurethan durch Kneten gemischt werden und die erhaltene Mischung auf T₁ erwärmt wird.
42. Verfahren nach Ausführungsform 41, wobei die Mischung gemäß c) für einen Zeitraum im Bereich von 0,1 bis 20 min, bevorzugt von 0,3 min bis 16 min, weiter bevorzugt von 0,5 bis 12 min bei T₁ gehalten wird.
43. Verfahren nach Ausführungsform 41 oder 42, wobei das Polymerisieren gemäß d) für einen Zeitraum im Bereich von 0,1 bis 45 min, weiter bevorzugt von 3 bis 25 min, weiter bevorzugt von 5 bis 15 min durchgeführt wird.
44. Verfahren nach Ausführungsform 26, wobei das Herstellen gemäß c) und das Zugeben und Polymerisieren gemäß d) als kontinuierliches Verfahren umfassend ein Extrusionsverfahren durchgeführt werden, wobei das Herstellen gemäß c) außerhalb des für das Extrusionsverfahren verwendeten Extruders durchgeführt wird, die gemäß c) hergestellte Mischung dem für das Extrusionsverfahren verwendeten Extruder zugeführt wird und das Polymerisieren gemäß d) innerhalb des Extruders durchgeführt wird.
45. Verfahren nach Ausführungsform 44, wobei gemäß a) das Caprolactam im festen Zustand und gemäß b) das thermoplastische Polyurethan im festen Zustand bereitgestellt werden und gemäß c) das Caprolactam und das thermoplastische Polyurethan durch Kneten im Extruder gemischt werden und die erhaltene Mischung auf T₁ erwärmt wird.
46. Verfahren nach Ausführungsform 44 oder 45, wobei die Mischung gemäß c) für einen Zeitraum im Bereich von 5 min bis 3 h, bevorzugt von 10 min bis 2 h, weiter bevorzugt von 20 min bis 1 h bei T₁ gehalten wird.
47. Verfahren nach einer der Ausführungsformen 44 bis 46, wobei der Polymerisationskatalysator in mindestens einer ersten Zone des Extruders zugeführt wird und die Mischung gemäß c) in mindestens einer zweiten Zone des Extruders zugeführt wird, wobei die mindestens eine zweite Zone der mindestens einen ersten Zone nachgeschaltet ist.
48. Verfahren nach einer der Ausführungsformen 44 bis 47, wobei gemäß d) zusätzlich ein Polymerisationsaktivator zugegeben wird und der Polymerisationsaktivator zu der außerhalb des Extruders hergestellten Mischung gemäß c) zugegeben wird.
49. Verfahren nach einer der Ausführungsformen 44 bis 48, wobei das Polymerisieren gemäß d) in mindestens einer Zone des Extruders für einen Zeitraum im Bereich von 0,5 bis 10 min, bevorzugt von 1 bis 6 min, weiter bevorzugt von 1,5 bis 4 min durchgeführt wird.
50. Verfahren nach Ausführungsform 26, wobei das Herstellen gemäß c) und das Zugeben und Polymerisieren gemäß d) als kontinuierliches Verfahren umfassend ein Extrusionsverfahren durchgeführt werden, wobei das Herstellen gemäß c) und das Polymerisieren gemäß d) innerhalb des für das Extrusionsverfahren verwendeten Extruders durchgeführt werden.
51. Verfahren nach Ausführungsform 50, wobei gemäß a) das Caprolactam im flüssigen Zustand und gemäß b) das thermoplastische Polyurethan im festen Zustand bereitgestellt werden und das Caprolactam im flüssigen Zustand und das thermoplastische Polyurethan im festen Zustand dem Extruder zugeführt werden.
52. Verfahren nach Ausführungsform 50 oder 51, wobei das thermoplastische Polyurethan in mindestens einer ersten Zone des Extruders bei einer Temperatur größer oder gleich T₀ in den flüssigen Zustand gebracht wird.
53. Verfahren nach Ausführungsform 52, wobei in mindestens einer zweiten Zone des Extruders, welche der mindestens einen ersten Zone des Extruders nachgeschaltet ist, das Caprolactam unter Erhalt der Mischung gemäß c) zu geführt wird.
54. Verfahren nach Ausführungsform 53, wobei in mindestens einer dritten Zone des Extruders, welche der mindestens einen zweiten Zone des Extruders nachgeschaltet ist, der Polymerisationskatalysator zugeführt wird und gemäß d) polymerisiert wird.
55. Verfahren nach einer der Ausführungsformen 50 bis 54, wobei gemäß d) zusätzlich ein Polymerisationsaktivator zugegeben wird und der Polymerisationsaktivator als Mischung mit Caprolactam in einer zweiten Zone des Extruders zugeführt wird.
56. Verfahren nach einer der Ausführungsformen 50 bis 55, wobei das Polymerisieren gemäß d) für einen Zeitraum im Bereich von 0,5 bis 10 min, bevorzugt 1 bis 6 min, weiter bevorzugt 1,5 bis 4 min durchgeführt wird.
57. Verfahren nach einer der Ausführungsformen 1 bis 56 zusätzlich umfassend:
   e) Granulieren des gemäß d) erhaltenen Copolymers.
58. Verfahren nach einer der Ausführungsformen 1 bis 57, zusätzlich umfassend:
   f) Tempern des gemäß d) erhaltenen Copolymers, bevorzugt des gemäß d) erhaltenen und gemäß e) granulierten Copolymers, bevorzugt bei einer Temperatur im Bereich von 60 bis 170 °C, weiter bevorzugt von 90 bis 150 °C, weiter bevorzugt von 100 bis 130 °C.
59. Thermoplastisches Copolymer, basierend auf Polycaprolactam und einem auf
   (i) mindestens einem Diisocyanat ausgewählt aus der Gruppe bestehend aus aliphatischen Diisocyanaten, aromatischen Diisocyanaten oder einem Gemisch aus zwei oder mehr davon, bevorzugt einem aliphatischen Diisocyanat;
   (ii) einem Diol ausgewählt aus der Gruppe bestehend aus aliphatischen Diolen, aromatischen Diolen und einem Gemisch aus zwei oder mehr davon; und
   (iii) einem Polyether ausgewählt aus der Gruppe bestehend aus aliphatischen Polyethern, aromatischen Polyethern und einem Gemisch aus zwei oder mehr davon
      basierenden thermoplastischen Polyurethan,
      wobei das Copolymer das thermoplastische Polyurethan in einer Menge von weniger als 25 Gew.-%, bezogen auf die Summe der Gewichte des im Copolymer enthaltenen Caprolactams und thermoplastischen Polyurethans, enthält.
60. Thermoplastisches Copolymer nach Ausführungsform 59, wobei die aromatischen Diisocyanate gemäß (i) ausgewählt sind aus der Gruppe bestehend aus C6- bis C20-Arylendiisocyanaten, C6- bis C20-Arylenalkylendiisocyanaten und einem Gemisch aus zwei oder mehr davon, weiter bevorzugt aus der Gruppe bestehend aus C6- bis C18-Arylendiisocyanaten, C6- bis C18-Arylenalkylendiisocyanaten und einem Gemisch aus zwei oder mehr davon, weiter bevorzugt aus der Gruppe bestehend aus C6- bis C14-Arylendiisocyanaten, C6- bis C14-Arylenalkylendiisocyanaten und einem Gemisch aus zwei oder mehr davon, weiter bevorzugt aus der Gruppe bestehend aus 4,4'-Methylendiphenyldiisocyanat (MDI), Toluol-2,4-diisocyanat (TDI) und einem Gemisch davon.
61. Thermoplastisches Copolymer nach Ausführungsform 59 oder 60, wobei das aliphatische Diisocyanat gemäß (i) ausgewählt ist aus der Gruppe bestehend aus C1-bis C20-Alkylendiisocyanaten und einem Gemisch aus zwei oder mehr davon, bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MDI) oder 1-Isocyanato-3-isocyanatomethyl-3,5,5-trimethylcyclohexan (IPDI) und einem Gemisch aus zwei oder mehr davon.
62. Thermoplastisches Copolymer nach einer der Ausführungsformen 59 bis 61, wobei die aliphatischen Diole gemäß (ii) ausgewählt sind aus der Gruppe bestehend aus C1- bis C20-Alkylendiolen und einem Gemisch aus zwei oder mehr davon, bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon.
63. Thermoplastisches Copolymer nach einer der Ausführungsformen 59 bis 62, wobei die aromatischen Diole gemäß (ii) ausgewählt sind aus der Gruppe bestehend aus C6- bis C20-Arylendiolen, C6- bis C20-Arylenalkylendiolen und einem Gemisch aus zwei oder mehr davon, bevorzugt aus der Gruppe bestehend aus C6- bis C18-Arylendiolen, C6-bis C18-Arylenalkylendiolen und einem Gemisch aus zwei oder mehr davon, weiter bevorzugt aus der Gruppe bestehend aus C6- bis C14-Arylendiolen, C6- bis C14-Arylenalkylendiolen und einem Gemisch aus zwei oder mehr davon.
64. Thermoplastisches Copolymer nach einer der Ausführungsformen 59 bis 63, wobei die aliphatischen Polyether gemäß (iii) ausgewählt sind aus der Gruppe bestehend aus Poly(C1- bis C20-alkylen)ethern und einem Gemisch aus zwei oder mehr davon, bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der Polyether gemäß (iii) weiter bevorzugt Polytetrahydrofuran ist.
65. Thermoplastisches Polymer nach einer der Ausführungsformen 59 bis 64, wobei die aromatischen Polyether gemäß (iii) ausgewählt sind aus der Gruppe bestehend aus Poly(C6- bis C20-arylen)ethern, Poly(C6- bis C20-arylenalkylen)ethern und einem Gemisch aus zwei oder mehr davon, weiter bevorzugt aus der Gruppe bestehend aus Poly(C6- bis C18-arylen)ethern, Poly(C6- bis C18-arylenalkylen)ethern und einem Gemisch aus zwei oder mehr davon, weiter bevorzugt aus der Gruppe bestehend aus Poly(C6- bis C14-arylen)ethern, Poly(C6- bis C14-arylenalkylen)ethern und einem Gemisch aus zwei oder mehr davon.
66. Thermoplastisches Copolymer nach einer der Ausführungsformen 59 bis 65, wobei mindestens eine, bevorzugt sämtliche der Komponenten Diol (ii) und Polyether (iii) aliphatisch sind.
67. Thermoplastisches Copolymer nach Ausführungsform 66, wobei die aliphatischen Komponenten (i), (ii) und (iii) einen linearen und/oder cyclischen Alkylenrest aufweisen, wobei weiter bevorzugt das aliphatische Diisocyanat (i) einen linearen und/oder cyclischen Alkylenrest, das aliphatische Diol (ii) einen linearen Alkylenrest und der aliphatische Polyether (iii) einen linearen Alkylenrest aufweisen.
68. Thermoplastisches Copolymer nach einer der Ausführungsformen 59 bis 67 mit einem Gehalt von nicht copolymerisiertem Lactam von höchstens 10 Gew.-%, bevorzugt von höchstens 7 Gew.-%, weiter bevorzugt von höchstens 5 Gew.-%, bezogen auf die Summe der Gewichte des thermoplastischen Copolymers und des nicht copolymerisierten Lactams.
69. Thermoplastisches Copolymer nach einer der Ausführungsformen 59 bis 68, wobei der Polyether gemäß (iii) ein Zahlenmittel des Molekulargewichts (Mₙ) im Bereich von 300 bis 8.000 g, bevorzugt von 600 bis 4.500 g, weiter bevorzugt von 800 bis 2.500 g aufweist.
70. Thermoplastisches Copolymer nach einer der Ausführungsformen 59 bis 69, wobei das thermoplastische Polyurethan ein Zahlenmittel des Molekulargewichts (Mₙ) im Bereich von 10.000 bis 300.000 g, bevorzugt von 15.000 bis 200.000 g, weiter bevorzugt von 19.000 bis 160.000 g aufweist.
71. Thermoplastisches Copolymer nach einer der Ausführungsformen 59 bis 70, wobei das Copolymer das thermoplastische Polyurethan in einer Menge im Bereich von 0,25 bis 20 Gew.-%, bevorzugt 0,5 bis 16,67 Gew.-%, weiter bevorzugt 1 bis 12,5 Gew.-%, bezogen auf die Summe der Gewichte des im Copolymer enthaltenen Caprolactams und thermoplastischen Polyurethans, enthält.
72. Thermoplastisches Copolymer nach einer der Ausführungsformen 59 bis 71 mit einem Biegemodul im Bereich von 5.000 bis 200.000 MPa, bevorzugt von 10.000 bis 150.000 MPa, weiter bevorzugt von 15.000 bis 100.000 MPa, bestimmt über ISO 14125.
73. Thermoplastisches Copolymer nach einer der Ausführungsformen 59 bis 72 mit einer Biegefestigkeit im Bereich von 100 bis 1500 MPa, bevorzugt von 200 bis 1.400 MPa, weiter bevorzugt von 400 bis 1.200 MPa, bestimmt über ISO 14125.
74. Thermoplastisches Copolymer nach einer der Ausführungsformen 59 bis 73, hergestellt oder herstellbar durch ein Verfahren gemäß einer der Ausführungsformen 1 bis 58.
75. Formkörper, hergestellt oder herstellbar aus einem thermoplastischen Copolymer gemäß einer der Ausführungsformen 59 bis 74, bevorzugt in Form eines Formkörpers hergestellt oder herstellbar durch ein Verfahren gemäß Ausführungsform 40.
76. Formkörper nach Ausführungsform 75, wobei der Formkörper mindestens einen Füllstoff enthält, welcher bevorzugt bei dem Polymerisieren gemäß d) nach Ausführungsform 40 in der Form bereitgestellt wird.
77. Formkörper nach Ausführungsform 76, wobei der Füllstoff Glasfaser, bevorzugt Glasfasergewebe umfasst.
78. Verwendung eines thermoplastischen Copolymers gemäß einer der Ausführungsformen 59 bis 74 zur Herstellung eines Formkörpers.
79. Verwendung nach Ausführungsform 78, wobei der Formkörper mindestens einen Füllstoff, bevorzugt Glasfaser, weiter bevorzugt Glasfasergewebe, enthält.

Die Erfindung wird in den nachfolgenden Beispielen näher erläutert.

### Beispiele

In den nachfolgenden experimentellen Beispielen und Vergleichsbeispielen wurden folgende Ausgangstoffe eingesetzt:
1. Lactam:
   Caprolactam, bezogen von der BASF
2. Thermoplastische Polyurethane (TPU), bezogen von der BASF:
   Elastollan A1185A (TPU basierend auf Polytetrahydrofuran 1000;
   Hexamethylendiisocyanat (HDI) und 1,6-Hexandiol), getempert bei 110 °C für 3 h;
   Elastollan E1170A (TPU basierend auf Polytetrahydrofuran 1000/2000;
   Methylendiphenyldiisocyanat (MDI) und 1,4-Butandiol), getempert bei 110 °C für 3 h.
3. Polymerisationskatalysator:
   Brüggolen C10 (17-19 % Natrium Caprolactamat in Caprolactam), bezogen von der Brüggemann KG, Heilbronn.
4. Polymerisationsaktivator:
   Brüggolen C20 (80 % Hexamethylene-1,6-dicarbamoylcaprolactam in Caprolactam),
   bezogen von der Brüggemann KG, Heilbronn.

### Beispiel 1

Die Polymerisationsreaktion erfolgte in einem 250 mL Rundkolben in trockener Stickstoffatmosphäre. Caprolactam (84 g) wurde bei 140 °C gelöst und anschließend erfolgte die Zugabe von 10 g thermoplastischem Polyurethan (10 Gew.-%) (Elastollan A1185A). Die Mischung wurde bei T₁ = 140 °C für 60 min gerührt. Anschließend wurden 2 g (80 Gew.-%) des Aktivator (Brüggolen C20) und nach 5 min. rühren 4 g des Katalysators (Brüggolen C10, 18 Gew.-% Natrium Caprolactamat in Caprolactam) in die schmelzflüssige Mischung gegeben und die Polymerisationsreaktion gestartet. Die anionische Polymerisation wurde bei T₂ = 170 °C durchgeführt und durch Abkühlen des Reaktors in Eiswasser (0 °C) gestoppt.

### Beispiel 2

Beispiel 1 wurde wiederholt, wobei statt 2 g Aktivator 1 g eingesetzt wurde.

### Beispiel 3

Beispiel 1 wurde wiederholt, wobei statt Elastollan A1185A als thermoplastisches Polyurethan Elastollan E1170A eingesetzt wurde.

### Beispiel 4

Beispiel 1 wurde wiederholt, wobei statt 10 g Ellastolan A1185A 5 g eingesetzt wurde.

### Beispiel 5

Beispiel 1 wurde wiederholt, wobei statt 10 g Ellastolan A1185A 5 g eingesetzt wurde und kein Aktivator eingesetzt wurde.

### Reacfiion Injection Molding (RIM)

In den nachfolgenden Beispielen 6 bis 11 und dem Vergleichsbeispiel erfolgte die Herstellung der Formkörper im Reaction Injection Molding (RIM)-Verfahren in einem beheizbaren Formträger. Die Mischung zum Polymerisieren wurde in einer Gießmaschine der Firma Tartler, Michelstadt angesetzt. Die Gießmaschine umfasste zwei Behälter mit einem jeweiligen Volumen von 20 Litern, die jeweils mit einer Pumpe mit einer Förderleistung von 40-400 ccm/min ausgestattet waren. Im ersten Behälter der Gießmaschine wurde in den Beispielen 6 bis 11 eine flüssige Mischung gemäß c) enthaltend das Caprolactam und das thermoplastische Polyurethan hergestellt, während im Vergleichsbeispiel eine Caprolactamschmelze hergestellt wurde, welche kein thermoplastisches Polyurethan enthielt. Im zweiten Behälter der Gießmaschine wurde eine flüssige Mischung enthaltend Polymerisationskatalysator und Caprolactam hergestellt. Anschließend wurde der Inhalt des ersten und des zweiten Behälters in einem der Gießmaschine nachgeschalteten dynamischen Mischer im Verhältnis 1:1 gemischt. Die so erhaltene Mischung wurde anschließend in eine RIM-Form eingetragen und in der Form polymerisiert.

### Beispiel 6

Herstellung von Formteilen mit 2,5 Gew.-% thermoplastischem Polyurethan (TPU).

In einem ersten Behälter der Gießmaschine wurde Caprolactam (9100 g) bei 120 °C geschmolzen, anschließend erfolgte die Zugabe von 500 g thermoplastischem Polyurethan (5 Gew.-%) (Elastollan A1185A), und dann wurde 400 g Aktivator Brüggolen C20 zugemischt. Die Mischung wurde bei T₁ = 120 °C für 60 min gerührt. In einem zweiten Behälter der Gießmaschine wurde Caprolactam (9.200 g) bei 120 °C geschmolzen und anschließend erfolgte die Zugabe von 800 g Katalysator Brüggolen C10. Die Mischung wurde bei 120 °C für 60 min gerührt.

Der Inhalt des ersten Behälters und des zweiten Behälters wurde in einem dynamischen Mischer (Mischtemperatur: 122 °C) mit 6.000 U/min im Verhältnis 1:1 gemischt. Die Mischung wurde in eine geschlossene, auf T₂ = 155 °C beheizte RIM-Form eingetragen. Diese Form hatte eine Abmessung von 340x340x4 mm. Nach 10 min Polymerisieren in der Form wurde das fertige Formteil entnommen. Die Ergebnisse sind in Tabelle 1 aufgeführt.

### Beispiel 7

Herstellung von Formteilen mit 5 Gew.-% TPU.

In einem ersten Behälter der Gießmaschine wurde Caprolactam (8600 g) bei 120 °C geschmolzen, anschließend erfolgte die Zugabe von 1000 g thermoplastischem Polyurethan (10 Gew.-%) (Elastollan A1185A) und dann wurde 400 g Aktivator Brüggolen C20 zugemischt. Die Mischung wurde bei T₁ = 120 °C für 60 min gerührt. In einem zweiten Behälter der Gießmaschine wurde Caprolactam (9.200 g) bei 120 °C geschmolzen und anschließend erfolgte die Zugabe von 800 g Katalysator Brüggolen C10. Die Mischung wurde bei 120 °C für 60 min gerührt.

Der Inhalt des ersten und des zweiten Behälters wurde in einem dynamischen Mischer (Mischtemperatur: 122 °C) mit 6.000 U/min im Verhältnis 1:1 gemischt. Die Mischung wurde in eine geschlossene, auf T₂ = 155 °C beheizte RIM-Form eingetragen. Diese Form hatte eine Abmessung von 340x340x4 mm. Nach 10 min Polymerisieren in der Form wurde das fertige Formteil entnommen. Die Ergebnisse sind in Tabelle 1 aufgeführt.

### Beispiel 8

Herstellung von Formteilen mit 2,5 Gew.-% TPU.

In einem ersten Behälter der Gießmaschine wurde Caprolactam (9300 g) bei 120 °C geschmolzen, anschließend erfolgte die Zugabe von 500 g thermoplastischem Polyurethan (5 Gew.-%) (Elastollan A1185A) und dann wurde 200 g Aktivator Brüggolen C20 zugemischt. Die Mischung wurde bei 120 °C für 60 min gerührt. In einem zweiten Behälter der Gießmaschine wurde Caprolactam (9200 g) bei 120 °C geschmolzen und anschließend erfolgte die Zugabe von 800 g Katalysator Brüggolen C10. Die Mischung wurde bei T₁ = 120 °C für 60 min gerührt.

Der Inhalt des ersten und des zweiten Behälters wurde in einem dynamischen Mischer (Mischtemperatur: 122 °C) mit 6.000 U/min im Verhältnis 1:1 gemischt. Die Mischung wurde in eine geschlossene, auf T₂ = 155 °C beheizte RIM-Form eingetragen. Diese Form hatte eine Abmessung von 340x340x4 mm. Nach 10 min Polymerisieren in der Form wurde das fertige Formteil entnommen. Die Ergebnisse sind in Tabelle 1 aufgeführt.

### Beispiel 9

Herstellung von Glasfaser-Gewebe enthaltenden Formteilen mit 2,5 Gew.-% TPU.

In einem ersten Behälter der Gießmaschine wurde Caprolactam (8800 g) bei 120 °C geschmolzen, anschließend erfolgte die Zugabe von 1000 g thermoplastischem Polyurethan (10 Gew.-%) (Elastollan A1185A), und dann wurde 200 g Aktivator Brüggolen C20 zugemischt. Die Mischung wurde bei T₁ = 120 °C für 60 min gerührt. In einem zweiten Behälter der Gießmaschine wurde Caprolactam (9.200 g) bei 120 °C geschmolzen und anschließend erfolgte die Zugabe von 800 g Katalysator Brüggolen C10. Die Mischung wurde bei 120 °C für 60 min gerührt.

Der Inhalt des ersten und des zweiten Behälters wurde in einem dynamischen Mischer (Mischtemperatur: 122 °C) mit 6000 U/min im Verhältnis 1:1 gemischt. Die Mischung wurde in eine geschlossene, auf T₂ = 155 °C beheizte und mit 8 Lagen Fasern (Schlichte FK800, Glasfilamentgewebe: Flächengewicht 280,0 g/m² ± 5 % bestimmt nach DIN EN 12127, Kettgarn EC9-68x3 t0, Schußgarn EC9-204, Fadendichte, Kette 7,0 Fd / cm ± 5 %, Schuß 6,5 Fd / cm ± 5 % bestimmt nach DIN EN 1049, Feuchtigkeitsgehalt kleiner 0,1 % ± 1 % bestimmt nach DIN EN 3616, Dicke (Richtwert trocken), 0,35 mm ± 5 % bestimmt nach DIN ISO 4603/E) gefüllte RIM-Form eingetragen. Diese Form hatte eine Abmessung von 340x340x2 mm und ein Volumen von 360 cm³. Nach 10 min Polymerisieren in der Form wurde das fertige Formteil entnommen. Die Ergebnisse sind in Tabelle 1 aufgeführt.

### Beispiel 10

Herstellung von Glasfaser-Gewebe enthaltenden Formteilen mit 5 Gew.-% TPU.

In einem ersten Behälter der Gießmaschine wurde Caprolactam (8800 g) bei 120 °C geschmolzen, anschließend erfolgte die Zugabe von 1000 g thermoplastischem Polyurethan (10 Gew.-%) (Elastollan A1185A). Die Mischung wurde bei 120 °C für 60 min gerührt. In einem zweiten Behälter der Gießmaschine wurde Caprolactam (9.200 g) bei 120 °C geschmolzen und anschließend erfolgte die Zugabe von 800 g Katalysator Brüggolen C10. Die Mischung wurde bei T₁ = 120 °C für 60 min gerührt.

Der Inhalt des ersten und des zweiten Behälters wurde in einem dynamischen Mischer (Mischtemperatur: 122 °C) mit 6.000 U/min im Verhältnis 1:1 gemischt. Die Mischung wurde in eine geschlossene, auf T₂ = 155 °C beheizte und mit 8 Lagen Fasern (Schlichte FK800, Glasfilamentgewebe: Flächengewicht 280,0 g/m² ± 5 % bestimmt nach DIN EN 12127, Kettgarn EC9-68x3 t0, Schußgarn EC9-204, Fadendichte, Kette 7,0 Fd / cm ± 5 %, Schuß 6,5 Fd / cm ± 5 % bestimmt nach DIN EN 1049, Feuchtigkeitsgehalt kleiner 0,1 % ± 1 % bestimmt nach DIN EN 3616, Dicke (Richtwert trocken), 0,35 mm ± 5 % bestimmt nach DIN ISO 4603/E) gefüllte RIM-Form eingetragen. Diese Form hatte eine Abmessung von 340x340x2 mm und ein Volumen von 360 cm³. Nach 10 min Polymerisieren in der Form wurde das fertige Formteil entnommen. Die Ergebnisse sind in Tabelle 1 aufgeführt.

### Beispiel 11

Herstellung von Glasfaser-Gewebe enthaltenden Formteilen mit 10 Gew.-% TPU.

In einem ersten Behälter der Gießmaschine wurde Caprolactam (7800 g) bei 120 °C geschmolzen und anschließend erfolgte die Zugabe von 2.000 g thermoplastischem Polyurethan (20 Gew.-%) (Elastollan A1185A). Die Mischung wurde bei 120 °C für 60 min gerührt. In einem zweiten Behälter der Gießmaschine wurde Caprolactam (9200 g) bei 120 °C geschmolzen und anschließend erfolgte die Zugabe von 800 g Katalysator Brüggolen C10 wurde. Die Mischung wurde bei T₁ = 120 °C für 60 min gerührt.

Der Inhalt des ersten und des zweiten Behälters wurde in einem dynamischen Mischer (Mischtemperatur: 122 °C) mit 6.000 U/min im Verhältnis 1:1 gemischt. Die Mischung wurde in eine geschlossene, auf T₂ = 155 °C beheizte und mit 8 Lagen Fasern (Schlichte FK800, Glasfilamentgewebe: Flächengewicht 280,0 g/m² ± 5 % bestimmt nach DIN EN 12127, Kettgarn EC9-68x3 t0, Schußgarn EC9-204, Fadendichte, Kette 7,0 Fd / cm ± 5 %, Schuß 6,5 Fd / cm ± 5 % bestimmt nach DIN EN 1049, Feuchtigkeitsgehalt kleiner 0,1 % ± 1 % bestimmt nach DIN EN 3616, Dicke (Richtwert trocken), 0,35 mm ± 5 % bestimmt nach DIN ISO 4603/E) gefüllte RIM-Form eingetragen. Diese Form hatte eine Abmessung von 340x340x2 mm und ein Volumen von 360 cm³. Nach 10 min Polymerisieren in der Form wurde das fertige Formteil entnommen. Die Ergebnisse sind in Tabelle 1 aufgeführt.

### Vergleichsbeispiel

Herstellung von Glasfaser-Gewebe enthaltenden Polycaprolactam-Formteilen.

In einem ersten Behälter der Gießmaschine wurde Caprolactam (9.600 g) bei 120 °C geschmolzen und anschließend erfolgte die Zugabe von 400 g Aktivator Brüggolen C20. Die Mischung wurde bei 120 °C für 60 min gerührt.

In einem zweiten Behälter der Gießmaschine wurde Caprolactam (9200 g) bei 120 °C geschmolzen und anschließend erfolgte die Zugabe von 800 g Katalysator Brüggolen C10. Die Mischung wurde bei T₁ = 120 °C für 60 min gerührt.

Der Inhalt des ersten und des zweiten Behälters wurde in einem dynamischen Mischer (Mischtemperatur: 122 °C) mit 6.000 U/min im Verhältnis 1:1 gemischt. Die Mischung wurde in eine geschlossene, auf T₂ = 155 °C beheizte und mit 8 Lagen Fasern (Schlichte FK800, Glasfilamentgewebe: Flächengewicht 280,0 g/m² ± 5 % bestimmt nach DIN EN 12127, Kettgarn EC9-68x3 t0, Schußgarn EC9-204, Fadendichte, Kette 7,0 Fd / cm ± 5 %, Schuß 6,5 Fd / cm ± 5 % bestimmt nach DIN EN 1049, Feuchtigkeitsgehalt kleiner 0,1 % ± 1 % bestimmt nach DIN EN 3616, Dicke (Richtwert trocken), 0,35 mm ± 5 % bestimmt nach DIN ISO 4603/E) gefüllte RIM-Form eingetragen. Diese Form hatte eine Abmessung von 340x340x2 mm und ein Volumen von 360 cm³. Nach 10 min Polymerisieren in der Form wurde das fertige Formteil entnommen. Die Ergebnisse sind in Tabelle 1 aufgeführt.

**Tabelle 1**

| **Beispiel:** | **1** | **2** | **3** | **4** | **5** | **6** | **7** | **8** | **9** | **10** | **11** | **Vergleichsbeispiel** |
|---|---|---|---|---|---|---|---|---|---|---|---|---|
| Elastollan A1185A / Gew.-% | 10 | 10 | | 5 | 5 | 2,5 | 5 | 2,5 | 5 | 5 | 10 | |
| Elastollan E1170A Gew.-% | | | 10 | | | | | | | | | |
| Brüggolen C10/Gew.-% | 4,3 | 4,3 | 4,3 | 4,3 | 4,3 | 4,3 | 4,3 | 4,2 | 4,2 | 4,2 | 4,2 | 4,3 |
| Brüggolen C20/Gew.-% | 2 | 2 | 2 | 2 | | 2 | 2 | 1 | 1 | | | 2 |
| Restgehalt Caprolactam /Gew.-% | 1,5 | 1,6 | 2,1 | 1,2 | 1,5 | 0,28 | 0,30 | 0,3 2 | 0,2 7 | 0,4 2 | 0,4 9 | 0,32 |
| Biegemodul / MPa | | | | | | 2361 0 | 2197 0 | | | | | 22230 |
| Biegefestigkeit/MPa | | | | | | 653 | 605 | | | | | 624 |

Die vorliegenden Beispiele zeigen deutlich die mit dem erfindungsgemäßen Verfahren verbundenen überraschenden Effekte. Dank dem speziellen, gemäß b) bereitgestellten TPU-Copolymer kann die Polymerisation gemäß Verfahrensschritt d) bei einer vorteilhaft niedrigen Temperatur T₂ von 140 °C bzw. 155 °C durchgeführt werden, wie aus den erfindungsgemäßen Beispielen 1 bis 11 ersichtlich ist. Zudem ist aus den erfindungsgemäßen Beispielen 6 und 7 ersichtlich, dass sich die mechanischen Eigenschaften Biegemodul und Biegefestigkeit des Copolymers auch bei zunehmendem Gehalt an thermoplastischem Polyurethan nicht verschlechtern. Im Gegensatz dazu verschlechtern sich die mechanischen Eigenschaften Biegemodul und Biegefestigkeit der im oben zitierten Stand der Technik G.S. Yang et. al. beschriebenen, auf Polyester-basiertem Polyurethanelastomer (TPEU) und Polycaprolactam basierenden Copolymere mit zunehmendem Gehalt an TPEU.

### Zitierte Literatur

- G.S. Yang et. al., "Preparation and characterisation of thermoplastic polyurethane elastomer and polyamide 6 blends by in situ anionic ring-opening polymerization of epsilon-caprolactam", Polymer Engineering and Science 2006, 46, Seiten 1196-1203
- G.S. Yang et. al. "A novel approach to the preparation of thermoplastic polyurethane elastomer and polyamide 6 blends by in situ anionic ring-opening polymerisation of epsilon-caprolactam", Polym. Int. 2006, 55, Seiten 643-649
- DE 10 2006 036 539 A1

## Patentansprüche

1. Verfahren zur Herstellung eines thermoplastischen, auf Polycaprolactam und einem thermoplastischen Polyurethan basierenden Copolymers, umfassend:
a) Bereitstellen von Caprolactam;
b) Bereitstellen des thermoplastischen, auf
(i) einem Diisocyanat ausgewählt aus der Gruppe bestehend aus aliphatischen Diisocyanaten, aromatischen Diisocyanaten und einem Gemisch aus zwei oder mehr davon;
(ii) einem Diol ausgewählt aus der Gruppe bestehend aus aliphatischen Diolen, aromatischen Diolen und einem Gemisch aus zwei oder mehr davon; und
(iii) einem Polyether ausgewählt aus der Gruppe bestehend aus aliphatischen Polyethern, aromatischen Polyethern und einem Gemisch aus zwei oder mehr davon
basierenden Polyurethans mit einer Schmelztemperatur T₀;
c) Herstellen einer flüssigen Mischung einer Temperatur T₁ enthaltend das Caprolactam und das thermoplastische Polyurethan;
d) Zugeben eines Polymerisationskatalysators zur flüssigen Mischung gemäß c) unter Erhalt einer Mischung enthaltend das Caprolactam und das thermoplastische Polyurethan in einem Massenverhältnis von Caprolactam zu thermoplastischem Polyurethan von mehr als 3:1, und Polymerisieren bei einer Temperatur T₂ von höchstens 175 °C unter Erhalt des thermoplastischen Copolymers.

2. Verfahren nach Anspruch 1, wobei die aliphatischen Diisocyanate gemäß (i) ausgewählt sind aus der Gruppe bestehend aus C1- bis C20-Alkylendiisocyanaten und einem Gemisch aus zwei oder mehr davon, bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MDI), 1-Isocyanato-3-isocyanatomethyl-3,5,5-trimethylcyclohexan (IPDI) und einem Gemisch aus zwei oder mehr davon; und
die aromatischen Diisocyanate gemäß (i) ausgewählt sind aus der Gruppe bestehend aus C6- bis C20-Arylendiisocyanaten, C6- bis C20-Arylenalkylendiisocyanaten und einem Gemisch aus zwei oder mehr davon, weiter bevorzugt aus der Gruppe bestehend aus C6- bis C18-Arylendiisocyanaten, C6- bis C18-Arylenalkylendiisocyanaten und einem Gemisch aus zwei oder mehr davon, weiter bevorzugt aus der Gruppe bestehend aus C6- bis C14-Arylendiisocyanaten, C6- bis C14-Arylenalkylendiisocyanaten und einem Gemisch aus zwei oder mehr davon, weiter bevorzugt aus der Gruppe bestehend aus 4,4'-Methylendiphenyldiisocyanat (MDI), Toluol-2,4-diisocyanat (TDI) und einem Gemisch davon.

3. Verfahren nach Anspruch 1 oder 2, wobei die aliphatischen Diole gemäß (ii) ausgewählt sind aus der Gruppe bestehend aus C1- bis C20-Alkylendiolen und einem Gemisch aus zwei oder mehr davon, bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon; und
die aromatischen Diole gemäß (ii) ausgewählt sind aus der Gruppe bestehend aus C6-bis C20-Arylendiolen, C6- bis C20-Arylenalkylendiolen und einem Gemisch aus zwei oder mehr davon, bevorzugt aus der Gruppe bestehend aus C6- bis C18-Arylendiolen, C6- bis C18-Arylenalkylendiolen und einem Gemisch aus zwei oder mehr davon, weiter bevorzugt aus der Gruppe bestehend aus C6- bis C14-Arylendiolen, C6- bis C14-Arylenalkylendiolen und einem Gemisch aus zwei oder mehr davon.

4. Verfahren nach einem der Ansprüche 1 bis 3, wobei die aliphatischen Polyether gemäß (iii) ausgewählt sind aus der Gruppe bestehend aus Poly(C1- bis C20-alkylen)ethern und einem Gemisch aus zwei oder mehr davon, bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der Polyalkylenether gemäß (iii) weiter bevorzugt Polytetrahydrofuran ist; und
die aromatischen Polyether gemäß (iii) ausgewählt sind aus der Gruppe bestehend aus Poly(C6- bis C20-arylen)ethern, Poly(C6- bis C20-arylenalkylen)ethern und einem Gemisch aus zwei oder mehr davon, weiter bevorzugt aus der Gruppe bestehend aus Poly(C6- bis C18-arylen)ethern, Poly(C6- bis C18-arylenalkylen)ethern und einem Gemisch aus zwei oder mehr davon, weiter bevorzugt aus der Gruppe bestehend aus Poly(C6- bis C14-arylen)ethern, Poly(C6- bis C14-arylenalkylen)ethern und einem Gemisch aus zwei oder mehr davon.

5. Verfahren nach einem der Ansprüche 1 bis 4, wobei mindestens eine, bevorzugt mindestens zwei, weiter bevorzugt sämtliche der Komponenten Diisocyanat (i), Diol (ii) und Polyether (iii) aliphatisch sind, wobei bevorzugt die aliphatischen Komponenten (i), (ii) und (iii) einen linearen und/oder cyclischen Alkylenrest aufweisen, wobei weiter bevorzugt das Diisocyanat (i) einen linearen und/oder cyclischen Alkylenrest, das Diol (ii) einen linearen Alkylenrest und der Polyether (iii) einen linearen Alkylenrest aufweisen.

6. Verfahren nach einem der Ansprüche 1 bis 5, wobei T₀ im Bereich von 155 bis 280 °C, bevorzugt von 160 bis 250 °C, weiter bevorzugt von 170 bis 230 °C liegt.

7. Verfahren nach einem der Ansprüche 1 bis 6, wobei T₁ kleiner oder gleich T₀ ist, wobei T₁ bevorzugt im Bereich von 100 bis 175 °C, weiter bevorzugt von 100 bis 160 °C, weiter bevorzugt von 110 bis 150 °C liegt.

8. Verfahren nach einem der Ansprüche 1 bis 7, wobei T₂ im Bereich von 100 bis 175 °C, bevorzugt von 115 bis 170 °C, weiter bevorzugt von 130 bis 160 °C liegt.

9. Verfahren nach einem der Ansprüche 1 bis 8, wobei der Polymerisationskatalysator gemäß d) ein Salz von Caprolactam, bevorzugt ein Alkali- oder Erdalkalimetallsalz von Caprolactam, weiter bevorzugt ein Alkalimetallsalz von Caprolactam, weiter bevorzugt das Natriumsalz oder das Kaliumsalz von Caprolactam, weiter bevorzugt das Natriumsalz von Caprolactam ist.

10. Verfahren nach einem der Ansprüche 1 bis 9, wobei gemäß d) zusätzlich ein Polymerisationsaktivator zugegeben wird, und wobei bevorzugt der Polymerisationsaktivator bei Bereitstellen eines thermoplastischen Polyurethans gemäß b) basierend auf mindestens einer aromatischen Komponente (i), (ii) und/oder (iii) zugegeben wird, wobei der Polymerisationsaktivator bevorzugt ausgewählt ist aus der Gruppe bestehend aus mit einer Carbonylgruppe N-substituierten Lactamen, aliphatischen und aromatischen Diisocyanaten, Allophanaten, Polyisocyanaten, aliphatischen und aromatischen Disäurehalogeniden, und einem Gemisch aus zwei oder mehr davon, weiter bevorzugt aus der Gruppe bestehend aus N,N'-C1- bis N,N'-C20-alkylendicarbamoylcaprolactamen, N,N'-Alkylendicarbamoylcaprolactamen, N-Acetyl C3-C10 Lactamen, C2-C16 Alkylendiisocyanaten, C5-C12 Arylendiisocyanaten, C5-C16 Arylenalkylendiisocyanaten, C1-C6 Alkylenallophanaten, C12-C24 Alkylenpolyisocyanaten, C2-C16 Alkylendisäurehalogeniden, C5-C12 Arylendisäurehalogeniden, C5-C16 Arylenalkylendisäurehalogeniden, und einem Gemisch aus zwei oder mehr davon, weiter bevorzugt aus der Gruppe bestehend aus N,N'-C3- bis N,N'-C8-Alkylendicarbamoylcaprolactamen, N-Acetyl C4-C8 Lactamen, C4-C13-Alkylendiisocyanaten, C6-C10 Arylendiisocyanaten, C7-C10 Arylenalkylendiisocyanaten, C2-C4 Alkylenallophanaten, C16-C20 Alkylenpolyisocyanaten, C4-C13 Alkylendisäurehalogeniden, C6-C10 Arylendisäurehalogeniden, C8-C12 Arylenalkylendisäurehalogeniden, und einem Gemisch aus zwei oder mehr davon.

11. Verfahren nach einem der Ansprüche 1 bis 10, wobei gemäß d) durch Zugeben des Polymerisationskatalysators zur flüssigen Mischung gemäß c) eine Mischung enthaltend das Caprolactam und das thermoplastische Polyurethan in einem Massenverhältnis von Caprolactam zu thermoplastischem Polyurethan im Bereich von 399:1 bis 4:1, bevorzugt 199:1 bis 5:1, weiter bevorzugt 99:1 bis 7:1 erhalten wird.

12. Verfahren nach einem der Ansprüche 1 bis 11, wobei das Herstellen gemäß c) und das Zugeben und Polymerisieren gemäß d) als diskontinuierliches oder kontinuierliches Verfahren, bevorzugt als diskontinuierliches Verfahren, weiter bevorzugt als diskontinuierliches Verfahren umfassend das Polymerisieren gemäß d) in eine Form, durchgeführt werden.

13. Thermoplastisches Copolymer, basierend auf Polycaprolactam und einem auf
(i) mindestens einem bevorzugt aliphatischen Diisocyanat;
(ii) einem Diol ausgewählt aus der Gruppe bestehend aus aliphatischen Diolen, aromatischen Diolen und einem Gemisch aus zwei oder mehr davon; und
(iii) einem Polyether ausgewählt aus der Gruppe bestehend aus aliphatischen Polyethern, aromatischen Polyethern und einem Gemisch aus zwei oder mehr davon
basierenden thermoplastischen Polyurethan,
wobei das Copolymer das thermoplastische Polyurethan in einer Menge von weniger als 25 Gew.-%, bezogen auf die Summe der Gewichte des im Copolymer enthaltenen Caprolactams und thermoplastischen Polyurethans, enthält, wobei das Diisocyanat gemäß (i) bevorzugt ein aliphatisches Diisocyanat ist, weiter bevorzugt ausgewählt aus der Gruppe bestehend aus C1- bis C20-Alkylendiisocyanaten und einem Gemisch aus zwei oder mehr davon, weiter bevorzugt aus der Gruppe bestehend aus C3- bis C18-Alkylendiisocyanaten und einem Gemisch aus zwei oder mehr davon, weiter bevorzugt aus der Gruppe bestehend aus C6- bis C13-Alkylendiisocyanaten und einem Gemisch aus zwei oder mehr davon, weiter bevorzugt aus der Gruppe bestehend aus 1,6-Hexamethylendiisocyanat (HDI), 4,4'-Diisocyanatodicyclohexylmethan (H12MDI), 1-Isocyanato-3-isocyanatomethyl-3,5,5-trimethylcyclohexan (IPDI)und einem Gemisch aus zwei oder mehr davon; wobei die aliphatischen Diole gemäß (ii) bevorzugt ausgewählt sind aus der Gruppe bestehend aus C1- bis C20-Alkylendiolen und einem Gemisch aus zwei oder mehr davon, weiter bevorzugt aus der Gruppe bestehend aus C3- bis C8-Alkylendiolen und einem Gemisch aus zwei oder mehr davon, weiter bevorzugt aus der Gruppe bestehend aus C4- bis C6-Alkylendiolen und einem Gemisch aus zwei oder mehr davon, weiter bevorzugt aus der Gruppe bestehend aus 1,4-Butandiol, 1,6-Hexandiol und einem Gemisch davon; und
die aromatischen Diole gemäß (ii) ausgewählt sind aus der Gruppe bestehend aus C6-bis C20-Arylendiolen, C6- bis C20-Arylenalkylendiolen und einem Gemisch aus zwei oder mehr davon, bevorzugt aus der Gruppe bestehend aus C6- bis C18-Arylendiolen, C6- bis C18-Arylenalkylendiolen und einem Gemisch aus zwei oder mehr davon, weiter bevorzugt aus der Gruppe bestehend aus C6- bis C14-Arylendiolen, C6- bis C14-Arylenalkylendiolen und einem Gemisch aus zwei oder mehr davon; wobei die aliphatischen Polyether gemäß (iii) bevorzugt ausgewählt sind aus der Gruppe bestehend aus Poly(C1- bis C20-alkylen)ethern und einem Gemisch aus zwei oder mehr davon, weiter bevorzugt aus der Gruppe bestehend aus Poly(C2- bis C12-alkylen)ethern und einem Gemisch aus zwei oder mehr davon, weiter bevorzugt aus der Gruppe bestehend aus Poly(C2- bis C6-alkylen)ethern und einem Gemisch aus zwei oder mehr davon, wobei der Polyether gemäß (iii) weiter bevorzugt Polytetrahydrofuran ist; und
die aromatischen Polyether gemäß (iii) ausgewählt sind aus der Gruppe bestehend aus Poly(C6- bis C20-arylen)ethern, Poly(C6- bis C20-arylenalkylen)ethern und einem Gemisch aus zwei oder mehr davon, weiter bevorzugt aus der Gruppe bestehend aus Poly(C6- bis C18-arylen)ethern, Poly(C6- bis C18-arylenalkylen)ethern und einem Gemisch aus zwei oder mehr davon, weiter bevorzugt aus der Gruppe bestehend aus Poly(C6- bis C14-arylen)ethern, Poly(C6- bis C14-arylenalkylen)ethern und einem Gemisch aus zwei oder mehr davon.

14. Thermoplastisches Copolymer nach Anspruch 13, wobei mindestens eine, bevorzugt sämtliche der Komponenten Diol (ii) und Polyether (iii) aliphatisch sind, wobei bevorzugt die aliphatischen Komponenten (i), (ii) und (iii) einen linearen und/oder cyclischen Alkylenrest aufweisen, wobei weiter bevorzugt das aliphatische Diisocyanat (i) einen linearen und/oder cyclischen Alkylenrest, das aliphatische Diol (ii) einen linearen Alkylenrest und der aliphatische Polyether (iii) einen linearen Alkylenrest aufweisen.

15. Thermoplastisches Copolymer nach Anspruch 13 oder 14, wobei das Copolymer das thermoplastische Polyurethan in einer Menge im Bereich von 0,25 bis 20 Gew.-%, bevorzugt 0,5 bis 16,67 Gew.-%, weiter bevorzugt 1 bis 12,5 Gew.-%, bezogen auf die Summe der Gewichte des im Copolymer enthaltenen Caprolactams und thermoplastischen Polyurethans, enthält.

16. Thermoplastisches Copolymer nach einem der Ansprüche 13 bis 15 mit einem Biegemodul im Bereich von 5.000 bis 200.000 MPa, bevorzugt von 10.000 bis 150.000 MPa, weiter bevorzugt von 15.000 bis 100.000 MPa, bestimmt über ISO 14125; und/oder mit einer Biegefestigkeit im Bereich von 100 bis 1.500 MPa, bevorzugt von 200 bis 1.400 MPa, weiter bevorzugt von 400 bis 1.200 MPa, bestimmt über ISO 14125.

17. Thermoplastisches Copolymer nach einem der Ansprüche 13 bis 16, hergestellt oder herstellbar durch ein Verfahren gemäß einem der Ansprüche 1 bis 12.

18. Formkörper, hergestellt oder herstellbar aus einem thermoplastischen Copolymer gemäß einem der Ansprüche 13 bis 17.

19. Verwendung eines thermoplastischen Copolymers gemäß einem der Ansprüche 13 bis 17 zur Herstellung eines Formkörpers.

## Claims

1. A process for preparing a thermoplastic copolymer based on polycaprolactam and a thermoplastic polyurethane, comprising:
a) providing caprolactam;
b) providing the thermoplastic polyurethane having a melting temperature T₀ and based on
(i) a diisocyanate selected from the group consisting of aliphatic diisocyanates, aromatic diisocyanates and a mixture of two or more thereof;
(ii) a diol selected from the group consisting of aliphatic diols, aromatic diols and a mixture of two or more thereof; and
(iii) a polyether selected from the group consisting of aliphatic polyethers, aromatic polyethers and a mixture of two or more thereof;
c) preparing a liquid mixture comprising the caprolactam and the thermoplastic polyurethane at a temperature T₁;
d) admixing a polymerization catalyst to the liquid mixture of c) to obtain a mixture comprising the caprolactam and the thermoplastic polyurethane in a mass ratio of caprolactam to thermoplastic polyurethane of more than 3:1 and polymerizing at a temperature T₂ of at most 175°C to obtain the thermoplastic copolymer.

2. The process according to claim 1 wherein the aliphatic diisocyanates of (i) are selected from the group consisting of C1 to C20 alkylene diisocyanates and a mixture of two or more thereof, preferably from the group consisting of C3 to C18 alkylene diisocyanates and a mixture of two or more thereof, more preferably from the group consisting of C6 to C13 alkylene diisocyanates and a mixture of two or more thereof, more preferably from the group consisting of 1,6-hexamethylene diisocyanate (HDI), 4,4'-diiso-cyanatodicyclohexylmethane (H12MDI), 1-isocyanato-3-isocyanatomethyl-3,5,5-trimethylcyclo-hexane (IPDI) and a mixture of two or more thereof; and
the aromatic diisocyanates of (i) are selected from the group consisting of C6 to C20 arylene diisocyanates, C6 to C20 arylenealkylene diisocyanates and a mixture of two or more thereof, more preferably from the group consisting of C6 to C18 arylene diisocyanates, C6 to C18 arylenealkylene diisocyanates and a mixture of two or more thereof, more preferably from the group consisting of C6 to C14 arylene diisocyanates, C6 to C14 arylenealkylene diisocyanates and a mixture of two or more thereof, more preferably from the group consisting of 4,4'-methylenediphenyl diisocyanate (MDI), tolylene 2,4-diisocyanate (TDI) and a mixture thereof.

3. The process according to claim 1 or 2 wherein the aliphatic diols of (ii) are selected from the group consisting of C1 to C20 alkylenediols and a mixture of two or more thereof, preferably from the group consisting of C3 to C8 alkylenediols and a mixture of two or more thereof, more preferably from the group consisting of C4 to C6 alkylenediols and a mixture of two or more thereof, more preferably from the group consisting of 1,4-butanediol, 1,6-hexanediol and a mixture thereof; and
the aromatic diols of (ii) are selected from the group consisting of C6 to C20 arylenediols, C6 to C20 arylenealkylenediols and a mixture of two or more thereof, preferably from the group consisting of C6 to C18 arylenediols, C6 to C18 arylenealkylenediols and a mixture of two or more thereof, more preferably from the group consisting of C6 to C14 arylenediols, C6 to C14 arylenealkylenediols and a mixture of two or more thereof.

4. The method according to any one of claims 1 to 3 wherein the aliphatic polyethers of (iii) are selected from the group consisting of poly(C1 to C20 alkylene) ethers and a mixture of two or more thereof, preferably from the group consisting of poly(C2 to C12 alkylene) ethers and a mixture of two or more thereof, further preferably from the group consisting of poly(C2 to C6 alkylene) ethers and a mixture of two or more thereof, wherein the polyalkylene ether of (iii) is further preferably polytetrahydrofuran; and
the aromatic polyethers of (iii) are selected from the group consisting of poly(C6 to C20 arylene)-ethers, poly(C6 to C20 arylenealkylene)ethers and a mixture of two or more thereof, more preferably from the group consisting of poly(C6 to C18 arylene)ethers, poly(C6 to C18 arylenealkylene)ethers and a mixture of two or more thereof, more preferably from the group consisting of poly(C6 to C14 arylene)ethers, poly(C6 to C14 arylenealkylene)ethers and a mixture of two or more thereof.

5. The process according to any one of claims 1 to 4 wherein one or more, preferably two or more, further preferably all of the components diisocyanate (i), diol (ii) and polyether (iii) are aliphatic, wherein preferably said aliphatic components (i), (ii) and (iii) have a linear and/or cyclic alkylene moiety, wherein more preferably said diisocyanate (i) has a linear and/or cyclic alkylene moiety, said diol (ii) has a linear alkylene moiety and said polyether (iii) has a linear alkylene moiety.

6. The process according to any of claims 1 to 5 wherein T₀ is in the range from 155 to 280°C, preferably from 160 to 250°C, more preferably from 170 to 230°C.

7. The process according to any of claims 1 to 6 wherein T₁ is not more than To, wherein T₁ is preferably in the range from 100 to 175°C, more preferably from 100 to 160°C, more preferably from 110 to 150°C.

8. The process according to any of claims 1 to 7 wherein T₂ is in the range from 100 to 175°C, preferably from 115 to 170°C, more preferably from 130 to 160°C.

9. The process according to any of claims 1 to 8 wherein the polymerization catalyst of d) is a salt of caprolactam, preferably an alkali or alkaline earth metal salt of caprolactam, more preferably an alkali metal salt of caprolactam, more preferably the sodium salt or the potassium salt of caprolactam, more preferably the sodium salt of caprolactam.

10. The process according to any of claims 1 to 9 wherein d) further comprises admixing a polymerization activator, and wherein the step of admixing the polymerization activator is preferably effected on providing a thermoplastic polyurethane b) based on at least one aromatic component (i), (ii) and/or (iii), wherein the polymerization activator is preferably selected from the group consisting of N-carbonyl-substituted lactams, aliphatic and aromatic diisocyanates, allophanates, polyisocyanates, aliphatic and aromatic diacyl halides, and a mixture of two or more thereof, more preferably from the group consisting of N,N'-C1- to N,N'-C20-alkylenedicarbamoylcaprolactams, N,N'-alkylenedicarbamoylcaprolactams, N-acetyl C3-C10 lactams, C2-C16 alkylene diisocyanates, C5-C12 arylene diisocyanates or C5-C16 arylenealkylene diisocyanates, C1-C6 alkylene allophanates, C12-C24 alkylene polyisocyanates, C2-C16 alkylenediacyl halides, C5-C12 arylenediacyl halides or C5-C16 arylenealkylenediacyl halides, and a mixture of two or more thereof, more preferably from the group consisting of N,N'-C3- to N,N'-C8-alkylenedicarbamoylcaprolactams, N-acetyl C4-C8 lactams, C4-C13 alkylene diisocyanates, C6-C10 arylene diisocyanates or C7-C10 arylenealkylene diisocyanates, C2-C4 alkylene allophanates, C16-C20 alkylene polyisocyanates, C4-C13 alkylenediacyl halides, C6-C10 arylenediacyl halides or C8-C12 arylenealkylenediacyl halides, and a mixture of two or more thereof.

11. The process according to any of claims 1 to 10 wherein admixing the polymerization catalyst to the liquid mixture of c) as per d) provides a mixture comprising the caprolactam and the thermoplastic polyurethane in a mass ratio of caprolactam to thermoplastic polyurethane in the range from 399:1 to 4:1, preferably from 199:1 to 5:1, more preferably from 99:1 to 7:1.

12. The process according to any of claims 1 to 11 wherein the preparing as per c) and the admixing and polymerizing as per d) are carried out as a batch process or as a continuous process, preferably as a batch process, more preferably as a batch process comprising the polymerizing as per d) into a shape.

13. A thermoplastic copolymer based on polycaprolactam and on a thermoplastic polyurethane based on
(i) at least one preferably aliphatic diisocyanate;
(ii) a diol selected from the group consisting of aliphatic diols, aromatic diols and a mixture of two or more thereof; and
(iii) a polyether selected from the group consisting of aliphatic polyethers, aromatic polyethers and a mixture of two or more thereof;
wherein the copolymer comprises the thermoplastic polyurethane in an amount of less than 25 wt%, based on the sum total of the weights of the caprolactam and of the thermoplastic polyurethane which are present in the copolymer, wherein the diisocyanate of (i) is preferably an aliphatic diisocyanate, more preferably selected from the group consisting of C1 to C20 alkylene diisocyanates and a mixture of two or more thereof, more preferably from the group consisting of C3 to C18 alkylene diisocyanates and a mixture of two or more thereof, more preferably from the group consisting of C6 to C13 alkylene diisocyanates and a mixture of two or more thereof, more preferably from the group consisting of 1,6-hexamethylene diisocyanate (HDI), 4,4'-diiso-cyanatodicyclohexylmethane (H12MDI), 1-isocyanato-3-isocyanatomethyl-3,5,5-trimethylcyclo-hexane (IPDI) and a mixture of two or more thereof; wherein the aliphatic diols of (ii) are preferably selected from the group consisting of C1 to C20 alkylenediols and a mixture of two or more thereof, more preferably from the group consisting of C3 to C8 alkylenediols and a mixture of two or more thereof, more preferably from the group consisting of C4 to C6 alkylenediols and a mixture of two or more thereof, more preferably from the group consisting of 1,4-butanediol, 1,6-hexanediol and a mixture thereof; and
the aromatic diols of (ii) are selected from the group consisting of C6 to C20 arylenediols, C6 to C20 arylenealkylenediols and a mixture of two or more thereof, preferably from the group consisting of C6 to C18 arylenediols, C6 to C18 arylenealkylenediols and a mixture of two or more thereof, more preferably from the group consisting of C6 to C14 arylenediols, C6 to C14 arylenealkylenediols and a mixture of two or more thereof; wherein the aliphatic polyethers of (iii) are preferably selected from the group consisting of poly(C1 to C20 alkylene) ethers and a mixture of two or more thereof, more preferably from the group consisting of poly(C2 to C12 alkylene) ethers and a mixture of two or more thereof, further preferably from the group consisting of poly(C2 to C6 alkylene) ethers and a mixture of two or more thereof, wherein the polyether of (iii) is further preferably polytetrahydrofuran; and
the aromatic polyethers of (iii) are selected from the group consisting of poly(C6 to C20 arylene)-ethers, poly(C6 to C20 arylenealkylene)ethers and a mixture of two or more thereof, more preferably from the group consisting of poly(C6 to C18 arylene)ethers, poly(C6 to C18 arylenealkylene)ethers and a mixture of two or more thereof, more preferably from the group consisting of poly(C6 to C14 arylene)ethers, poly(C6 to C14 arylenealkylene)ethers and a mixture of two or more thereof.

14. The thermoplastic copolymer according to claim 13 wherein one or more and preferably all of the components diol (ii) and polyether (iii) are aliphatic, wherein preferably said aliphatic components (i), (ii) and (iii) have a linear and/or cyclic alkylene moiety, wherein more preferably said aliphatic diisocyanate (i) has a linear and/or cyclic alkylene moiety, said aliphatic diol (ii) has a linear alkylene moiety and said aliphatic polyether (iii) has a linear alkylene moiety.

15. The thermoplastic copolymer according to claim 13 or 14 wherein the copolymer comprises the thermoplastic polyurethane in an amount ranging from 0.25 to 20 wt%, preferably 0.5 to 16.67 wt% and more preferably from 1 to 12.5 wt%, based on the sum total of the weights of the caprolactam and of the thermoplastic polyurethane which are present in the copolymer.

16. The thermoplastic copolymer according to any one of claims 13 to 15 with a flexural modulus in the range from 5000 to 200 000 MPa, preferably from 10 000 to 150 000 MPa and more preferably from 15 000 to 100 000 MPa, determined via ISO 14125; and/or with a flexural strength in the range from 100 to 1500 MPa, preferably from 200 to 1400 MPa and more preferably from 400 to 1200 MPa, determined via ISO 14125.

17. The thermoplastic copolymer according to any one of claims 13 to 16, obtained or obtainable by a process according to any one of claims 1 to 12.

18. A shaped article made of or obtainable from a thermoplastic copolymer according to any one of claims 13 to 17.

19. The method of using a thermoplastic copolymer according to any one of claims 13 to 17 in the manufacture of a shaped article.

## Revendications

1. Procédé de fabrication d'un copolymère thermoplastique à base de polycaprolactame et d'un polyuréthane thermoplastique, comprenant :
a) la préparation de caprolactame ;
b) la préparation du polyuréthane thermoplastique à base de
(i) un diisocyanate choisi dans le groupe constitué par les diisocyanates aliphatiques, les diisocyanates aromatiques et un mélange de deux ou plus d'entre eux ;
(ii) un diol choisi dans le groupe constitué par les diols aliphatiques, les diols aromatiques et un mélange de deux ou plus d'entre eux ; et
(iii) un polyéther choisi dans le groupe constitué par les polyéthers aliphatiques, les polyéthers aromatiques et un mélange de deux ou plus d'entre eux, ayant une température de fusion T₀ ;
c) la fabrication d'un mélange liquide ayant une température T₁ contenant le caprolactame et le polyuréthane thermoplastique ;
d) l'ajout d'un catalyseur de polymérisation au mélange liquide selon c) pour obtenir un mélange contenant le caprolactame et le polyuréthane thermoplastique en un rapport en masse entre le caprolactame et le polyuréthane thermoplastique de plus de 3:1, et la polymérisation à une température T₂ d'au plus 175 °C pour obtenir le copolymère thermoplastique.

2. Procédé selon la revendication 1, dans lequel les diisocyanates aliphatiques selon (i) sont choisis dans le groupe constitué par les diisocyanates d'alkylène en C1 à C20 et un mélange de deux ou plus d'entre eux, de préférence dans le groupe constitué par les diisocyanates d'alkylène en C3 à C18 et un mélange de deux ou plus d'entre eux, de manière davantage préférée dans le groupe constitué par les diisocyanates d'alkylène en C6 à C13 et un mélange de deux ou plus d'entre eux, de manière davantage préférée dans le groupe constitué par le diisocyanate de 1,6-hexaméthylène (HDI), le 4,4'-diisocyanatodicyclohexylméthane (H12MDI), le 1-isocyanato-3-isocyanatométhyl-3,5,5-triméthylcyclohexane (IPDI) et un mélange de deux ou plus d'entre eux ; et
les diisocyanates aromatiques selon (i) sont choisis dans le groupe constitué par les diisocyanates d'arylène en C6 à C20, les diisocyanates d'arylène-alkylène en C6 à C20 et un mélange de deux ou plus d'entre eux, de manière davantage préférée dans le groupe constitué par les diisocyanates d'arylène en C6 à C18, les diisocyanates d'arylène-alkylène en C6 à C18 et un mélange de deux ou plus d'entre eux, de manière davantage préférée dans le groupe constitué par les diisocyanates d'arylène en C6 à C14, les diisocyanates d'arylène-alkylène en C6 à C14 et un mélange de deux ou plus d'entre eux, de manière davantage préférée dans le groupe constitué par le diisocyanate de 4,4'-méthylène-diphényle (MDI), le 2,4-diisocyanate de toluène (TDI) et un mélange d'entre eux.

3. Procédé selon la revendication 1 ou 2, dans lequel les diols aliphatiques selon (ii) sont choisis dans le groupe constitué par les alkylène-diols en C1 à C20 et un mélange de deux ou plus d'entre eux, de préférence dans le groupe constitué par les alkylène-diols en C3 à C8 et un mélange de deux ou plus d'entre eux, de manière davantage préférée dans le groupe constitué par les alkylène-diols en C4 à C6 et un mélange de deux ou plus d'entre eux, de manière davantage préférée dans le groupe constitué par le 1,4-butanediol, le 1,6-hexanediol et un mélange d'entre eux ; et
les diols aromatiques selon (ii) sont choisis dans le groupe constitué par les arylène-diols en C6 à C20, les arylène-alkylène-diols en C6 à C20 et un mélange de deux ou plus d'entre eux, de préférence dans le groupe constitué par les arylène-diols en C6 à C18, les arylène-alkylène-diols en C6 à C18 et un mélange de deux ou plus d'entre eux, de manière davantage préférée dans le groupe constitué par les arylène-diols en C6 à C14, les arylène-alkylène-diols en C6 à C14 et un mélange de deux ou plus d'entre eux.

4. Procédé selon l'une quelconque des revendications 1 à 3, dans lequel les polyéthers aliphatiques selon (iii) sont choisis dans le groupe constitué par les polyéthers d'alkylène en C1 à C20 et un mélange de deux ou plus d'entre eux, de préférence dans le groupe constitué par les polyéthers d'alkylène en C2 à C12 et un mélange de deux ou plus d'entre eux, de manière davantage préférée dans le groupe constitué par les polyéthers d'alkylène en C2 à C6 et un mélange de deux ou plus d'entre eux, le polyéther d'alkylène selon (iii) étant de manière davantage préférée le polytétrahydrofurane ; et
les polyéthers aromatiques selon (iii) sont choisis dans le groupe constitué par les polyéthers d'arylène en C6 à C20, les polyéthers d'arylène-alkylène en C6 à C20 et un mélange de deux ou plus d'entre eux, de manière davantage préférée dans le groupe constitué par les polyéthers d'arylène en C6 à C18, les polyéthers d'arylène-alkylène en C6 à C18 et un mélange de deux ou plus d'entre eux, de manière davantage préférée dans le groupe constitué par les polyéthers d'arylène en C6 à C14, les polyéthers d'arylène-alkylène en C6 à C14 et un mélange de deux ou plus d'entre eux.

5. Procédé selon l'une quelconque des revendications 1 à 4, dans lequel au moins, de préférence au moins deux, de manière davantage préférée tous les composants diisocyanate (i), diol (ii) et polyéther (iii) sont aliphatiques, les composants aliphatiques (i), (ii) et (iii) comprenant de préférence un radical alkylène linéaire et/ou cyclique, de manière davantage préférée le diisocyanate (i) comprenant un radical alkylène linéaire et/ou cyclique, le diol (ii) comprenant un radical alkylène linéaire et le polyéther (iii) comprenant un radical alkylène linéaire.

6. Procédé selon l'une quelconque des revendications 1 à 5, dans lequel T₀ se situe dans la plage allant de 155 à 280 °C, de préférence de 160 à 250 °C, de manière davantage préférée de 170 à 230 °C.

7. Procédé selon l'une quelconque des revendications 1 à 6, dans lequel T₁ est inférieure ou égale à T₀, T₁ se situant de préférence dans la plage allant de 100 à 175 °C, de manière davantage préférée de 100 à 160 °C, de manière davantage préférée de 110 à 150 °C.

8. Procédé selon l'une quelconque des revendications 1 à 7, dans lequel T₂ se situe dans la plage allant de 100 à 175 °C, de préférence de 115 à 170 °C, de manière davantage préférée de 130 à 160 °C.

9. Procédé selon l'une quelconque des revendications 1 à 8, dans lequel le catalyseur de polymérisation selon d) est un sel de caprolactame, de préférence un sel de métal alcalin ou alcalino-terreux de caprolactame, de manière davantage préférée un sel de métal alcalin de caprolactame, de manière davantage préférée le sel de sodium ou le sel de potassium de caprolactame, de manière davantage préférée le sel de sodium de caprolactame.

10. Procédé selon l'une quelconque des revendications 1 à 9, dans lequel, selon d), un activateur de polymérisation est en outre ajouté et dans lequel l'activateur de polymérisation est de préférence ajouté lors de la préparation d'un polyuréthane thermoplastique selon b) à base d'au moins un composant (i), (ii) et/ou (iii) aromatique, l'activateur de polymérisation étant de préférence choisi dans le groupe constitué par les lactames N-substitués avec un groupe carbonyle, les diisocyanates aliphatiques et aromatiques, les allophanates, les polyisocyanates, les halogénures de diacides aliphatiques et aromatiques, et un mélange de deux ou plus d'entre eux, de manière davantage préférée dans le groupe constitué par les N,N'-alkylène en C1 à C20-dicarbamoylcaprolactames, les N,N'-alkylène-dicarbamoylcaprolactames, les N-acétyl-lactames en C3-C10, les diisocyanates d'alkylène en C2-C16, les diisocyanates d'arylène en C5-C12, les diisocyanates d'arylène-alkylène en C5-C16, les allophanates d'alkylène en C1-C6, les polyisocyanates d'alkylène en C12-C24, les halogénures d'acides alkylène-dioïques en C2-C16, les halogénures d'acides arylène-dioïques en C5-C12, les halogénures d'acides arylène-alkylène-dioïques en C5-C16, et un mélange de deux ou plus d'entre eux, de manière davantage préférée dans le groupe constitué par les N,N'-alkylène en C3 à C8-dicarbamoylcaprolactames, les N-acétyl-lactames en C4-C8, les diisocyanates d'alkylène en C4-C13, les diisocyanates d'arylène en C6-C10, les diisocyanates d'arylène-alkylène en C7-C10, les allophanates d'alkylène en C2-C4, les polyisocyanates d'alkylène en C16-C20, les halogénures d'acides alkylène-dioïques en C4-C13, les halogénures d'acides arylène-dioïques en C6-C10, les halogénures d'acides arylène-alkylène-dioïques en C8-C12, et un mélange de deux ou plus d'entre eux.

11. Procédé selon l'une quelconque des revendications 1 à 10, dans lequel, selon d), par ajout du catalyseur de polymérisation au mélange liquide selon c), un mélange contenant le caprolactame et le polyuréthane thermoplastique en un rapport en masse entre le caprolactame et le polyuréthane thermoplastique dans la plage allant de 399:1 à 4:1, de préférence de 199:1 à 5:1, de manière davantage préférée de 99:1 à 7:1, est obtenu.

12. Procédé selon l'une quelconque des revendications 1 à 11, dans lequel la fabrication selon c) et l'ajout et la polymérisation selon d) sont réalisés sous la forme d'un procédé discontinu ou continu, de préférence sous la forme d'un procédé discontinu, de manière davantage préférée sous la forme d'un procédé discontinu comprenant la polymérisation selon d) dans un moule.

13. Copolymère thermoplastique, à base de polycaprolactame et d'un polyuréthane thermoplastique à base de
(i) au moins un diisocyanate de préférence aliphatique ;
(ii) un diol choisi dans le groupe constitué par les diols aliphatiques, les diols aromatiques et un mélange de deux ou plus d'entre eux ; et
(iii) un polyéther choisi dans le groupe constitué par les polyéthers aliphatiques, les polyéthers aromatiques et un mélange de deux ou plus d'entre eux,
le copolymère contenant le polyuréthane thermoplastique en une quantité de moins de 25 % en poids, par rapport à la somme des poids du caprolactame et du polyuréthane thermoplastique contenus dans le copolymère, le diisocyanate selon (i) étant de préférence un diisocyanate aliphatique, de manière davantage préférée choisi dans le groupe constitué par les diisocyanates d'alkylène en C1 à C20 et un mélange de deux ou plus d'entre eux, de manière davantage préférée dans le groupe constitué par les diisocyanates d'alkylène en C3 à C18 et un mélange de deux ou plus d'entre eux, de manière davantage préférée dans le groupe constitué par les diisocyanates d'alkylène en C6 à C13 et un mélange de deux ou plus d'entre eux, de manière davantage préférée dans le groupe constitué par le diisocyanate de 1,6-hexaméthylène (HDI), le 4,4'-diisocyanatodicyclohexylméthane (H12MDI), le 1-isocyanato-3-isocyanatométhyl-3,5,5-triméthylcyclohexane (IPDI) et un mélange de deux ou plus d'entre eux ; les diols aliphatiques selon (ii) étant de préférence choisis dans le groupe constitué par les alkylène-diols en C1 à C20 et un mélange de deux ou plus d'entre eux, de manière davantage préférée dans le groupe constitué par les alkylène-diols en C3 à C8 et un mélange de deux ou plus d'entre eux, de manière davantage préférée dans le groupe constitué par les alkylène-diols en C4 à C6 et un mélange de deux ou plus d'entre eux, de manière davantage préférée dans le groupe constitué par le 1,4-butanediol, le 1,6-hexanediol et un mélange d'entre eux ; et
les diols aromatiques selon (ii) étant choisis dans le groupe constitué par les arylène-diols en C6 à C20, les arylène-alkylène-diols en C6 à C20 et un mélange de deux ou plus d'entre eux, de préférence dans le groupe constitué par les arylène-diols en C6 à C18, les arylène-alkylène-diols en C6 à C18 et un mélange de deux ou plus d'entre eux, de manière davantage préférée dans le groupe constitué par les arylène-diols en C6 à C14, les arylène-alkylène-diols en C6 à C14 et un mélange de deux ou plus d'entre eux ; les polyéthers aliphatiques selon (iii) étant de préférence choisis dans le groupe constitué par les polyéthers d'alkylène en C1 à C20 et un mélange de deux ou plus d'entre eux, de manière davantage préférée dans le groupe constitué par les polyéthers d'alkylène en C2 à C12 et un mélange de deux ou plus d'entre eux, de manière davantage préférée dans le groupe constitué par les polyéthers d'alkylène en C2 à C6 et un mélange de deux ou plus d'entre eux, le polyéther selon (iii) étant de manière davantage préférée le polytétrahydrofurane ; et
les polyéthers aromatiques selon (iii) étant choisis dans le groupe constitué par les polyéthers d'arylène en C6 à C20, les polyéthers d'arylène-alkylène en C6 à C20 et un mélange de deux ou plus d'entre eux, de manière davantage préférée dans le groupe constitué par les polyéthers d'arylène en C6 à C18, les polyéthers d'arylène-alkylène en C6 à C18 et un mélange de deux ou plus d'entre eux, de manière davantage préférée dans le groupe constitué par les polyéthers d'arylène en C6 à C14, les polyéthers d'arylène-alkylène en C6 à C14 et un mélange de deux ou plus d'entre eux.

14. Copolymère thermoplastique selon la revendication 13, dans lequel au moins, de préférence tous les composants diol (ii) et polyéther (iii) sont aliphatiques, les composants aliphatiques (i), (ii) et (iii) comprenant de préférence un radical alkylène linéaire et/ou cyclique, de manière davantage préférée le diisocyanate aliphatique (i) comprenant un radical alkylène linéaire et/ou cyclique, le diol aliphatique (ii) comprenant un radical alkylène linéaire et le polyéther aliphatique (iii) comprenant un radical alkylène linéaire.

15. Copolymère thermoplastique selon la revendication 13 ou 14, dans lequel le copolymère contient le polyuréthane thermoplastique en une quantité dans la plage allant de 0,25 à 20 % en poids, de préférence de 0,5 à 16,67 % en poids, de manière davantage préférée de 1 à 12,5 % en poids, par rapport à la somme des poids du caprolactame et du polyuréthane thermoplastique contenus dans le copolymère.

16. Copolymère thermoplastique selon l'une quelconque des revendications 13 à 15, présentant un module de flexion dans la plage allant de 5 000 à 200 000 MPa, de préférence de 10 000 à 150 000 MPa, de manière davantage préférée de 15 000 à 100 000 MPa, déterminé selon ISO 14125 ; et/ou une résistance en flexion dans la plage allant de 100 à 1 500 MPa, de préférence de 200 à 1 400 MPa, de manière davantage préférée de 400 à 1 200 MPa, déterminée selon ISO 14125.

17. Copolymère thermoplastique selon l'une quelconque des revendications 13 à 16, fabriqué ou fabricable par un procédé selon l'une quelconque des revendications 1 à 12.

18. Corps moulé, fabriqué ou fabricable à partir d'un copolymère thermoplastique selon l'une quelconque des revendications 13 à 17.

19. Utilisation d'un copolymère thermoplastique selon l'une quelconque des revendications 13 à 17 pour la fabrication d'un corps moulé.
